(19) Europäisches Patentamt
European Patent Office
Office européen des brevets

(11) **EP 4 703 331 A1**

(12) **EUROPEAN PATENT APPLICATION**
published in accordance with Art. 153(4) EPC

(43) Date of publication:
**04.03.2026 Bulletin 2026/10**

(21) Application number: **24795741.8**

(22) Date of filing: **27.03.2024**

(51) International Patent Classification (IPC):
*C03C 10/02* (2006.01)   *C03C 3/085* (2006.01)

(52) Cooperative Patent Classification (CPC):
Y02P 40/57

(86) International application number:
**PCT/CN2024/084090**

(87) International publication number:
**WO 2024/222360 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310470769**

(71) Applicant: **CDGM Glass Co. Ltd.**
**Chengdu, Sichuan 610100 (CN)**

(72) Inventors:
• **LI, Sai**
**Chengdu, Sichuan 610100 (CN)**

• **YUAN, Baoping**
**Chengdu, Sichuan 610100 (CN)**
• **WANG, Changhong**
**Chengdu, Sichuan 610100 (CN)**
• **CHEN, Xuemei**
**Chengdu, Sichuan 610100 (CN)**
• **JIANG, Tao**
**Chengdu, Sichuan 610100 (CN)**
• **LI, Mei**
**Chengdu, Sichuan 610100 (CN)**

(74) Representative: **Bandpay & Greuter**
**11, rue Christophe Colomb**
**75008 Paris (FR)**

(54) **GLASS CERAMIC AND GLASS CERAMIC PRODUCT, AND MANUFACTURING METHODS THEREFOR**

(57)    The present invention provides a microcrystalline glass product, wherein components of the microcrystalline glass product are represented by weight percentage, comprising: 40-55% of $SiO_2$; 15-30% of $Al_2O_3$; 0.1-6% of $Li_2O$; 9-20% of ZnO; 0.1-6% of MgO; and 0.5-7% of $TiO_2$. Through rational component design, the microcrystalline glass product obtained by the present invention has excellent mechanical performance and is applicable to display devices or electronic devices.

EP 4 703 331 A1

## EP 4 703 331 A1

**Description**

Technical Field

The present invention relates to a microcrystalline glass, and in particular, to a microcrystalline glass and microcrystalline glass product with excellent mechanical performance, which are applicable to display devices or electronic devices.

Background

In recent years, microcrystalline glass has been commonly used in various displays of many electronic products and display devices, such as mobile phone, music player, e-book reader, notepad, tablet, laptop, ATM and other similar devices. The materials used to form housings of the display devices and electronic devices are usually selected to meet the mechanical requirements associated with the end use of the electronic devices. On the other hand, electronic devices or display devices pose higher requirements on optical performance of the microcrystalline glass used therein. The optical performance refers to the performance of a substance when absorbing, reflecting and refracting light, such as haze, and | B| value. However, the currently marketable microcrystalline glass has high haze, which is difficult to be applied to display devices or electronic devices with high optical performance requirements.

Summary

The technical problem to be solved by the present invention is to provide a microcrystalline glass and microcrystalline glass product with excellent mechanical performance.

To solve the technical problem, the technical scheme of the present invention provides:

(1) A microcrystalline glass product, wherein components thereof are represented by weight percentage, comprising: 40-55% of $SiO_2$; 15-30% of $Al_2O_3$; 0.1-6% of $Li_2O$; 9-20% of $ZnO$; 0.1-6% of $MgO$; 0.5-7% of $TiO_2$.

(2) The microcrystalline glass product according to (1), wherein components thereof are represented by weight percentage, further comprising: 0-8% of $P_2O_5+ZrO_2$; and/or 0-6% of $Na_2O$; and/or 0-4% of $B_2O_3$; and/or 0-3% of $K_2O$; and/or 0-5% of $CaO+BaO+SrO$; and/or 0-6% of $Y_2O_3$; and/or 0-2% of clarifying agent.

(3) A microcrystalline glass product, wherein components thereof comprise $SiO_2$, $Al_2O_3$, $ZnO$, and $TiO_2$, the microcrystalline glass product comprises spinel crystalline phase, and a drop resistance of the microcrystalline glass product is 1200mm or more.

(4) A microcrystalline glass product, comprising spinel crystalline phase, wherein a drop ball test height of the microcrystalline glass product is 1000mm or more.

(5) A microcrystalline glass product, wherein components thereof comprise $SiO_2$, $Al_2O_3$, $Li_2O$, $ZnO$, and $TiO_2$, and a compressive strength of the microcrystalline glass product is 400N or more.

(6) A microcrystalline glass product, wherein components thereof comprise $SiO_2$, $Al_2O_3$, $Li_2O$, $ZnO$, and $TiO_2$, and haze of the microcrystalline glass product with a thickness of 1mm or less is 0.3% or less.

(7) A microcrystalline glass product, comprising spinel crystalline phase, wherein an average light |B| value at 400-800nm of the microcrystalline glass product with a thickness of 1mm or less is 1.0 or less.

(8) A microcrystalline glass product, wherein components thereof comprise $SiO_2$, $Al_2O_3$, $Li_2O$, $ZnO$, and $TiO_2$, and a surface stress of the microcrystalline glass product is 200MPa or more.

(9) A microcrystalline glass product, wherein components thereof comprise $SiO_2$, $Al_2O_3$, $Li_2O$, $ZnO$, and $TiO_2$, and a grain size of the microcrystalline glass product is 60nm or less.

(10) A microcrystalline glass product, comprising spinel crystalline phase, wherein a depth of an ion exchange layer of the microcrystalline glass product is $75\mu m$ or more.

(11) A microcrystalline glass product, comprising spinel crystalline phase, wherein light transmittance at 550nm wavelength of the microcrystalline glass product with a thickness of 1mm or less is 87.0% or more.

(12) A microcrystalline glass product, wherein components thereof comprise $SiO_2$, $Al_2O_3$, and $ZnO$, and the microcrystalline glass product comprises spinel crystalline phase.

(13) A microcrystalline glass product, wherein components thereof comprise $SiO_2$, $Al_2O_3$, $Li_2O$, and $ZnO$, and Vickers hardness of the microcrystalline glass product is 650kgf/mm$^2$ or more.

(14) The microcrystalline glass product according to any of (3)-(13), wherein components thereof are represented by weight percentage, comprising: 40-55% of $SiO_2$; and/or 15-30% of $Al_2O_3$; and/or 0.1-6% of $Li_2O$; and/or 9-20% of $ZnO$; and/or 0.1-6% of $MgO$; and/or 0.5-7% of $TiO_2$; and/or 0-8% of $P_2O_5+ZrO_2$; and/or 0-6% of $Na_2O$; and/or 0-4% of $B_2O_3$; and/or 0-3% of $K_2O$; and/or 0-5% of $CaO+BaO+SrO$; and/or 0-6% of $Y_2O_3$; and/or 0-2% of clarifying agent.

(15) A microcrystalline glass product, wherein components thereof are represented by weight percentage, consisting of: 40-55% of $SiO_2$; 15-30% of $Al_2O_3$; 0.1-6% of $Li_2O$; 9-20% of ZnO; 0.1-6% of MgO; 0.5-7% of $TiO_2$; 0-8% of $P_2O_5$ +$ZrO_2$; 0-6% of $Na_2O$; 0-4% of $B_2O_3$; 0-3% of $K_2O$; 0-5% of CaO+BaO+SrO; 0-6% of $Y_2O_3$; 0-2% of clarifying agent.

(16) The microcrystalline glass product according to any of (1)-(15), wherein components thereof are represented by weight percentage, and one or more of the following 7 conditions are satisfied:

1) $Li_2O/TiO_2$ is 0.2-4.5, $Li_2O/TiO_2$ is preferably 0.5-3.5, $Li_2O/TiO_2$ is more preferably 0.7-2.5, $Li_2O/TiO_2$ is further preferably 0.75-1.5;

2) $Al_2O_3$+ZnO is 26-45%, $Al_2O_3$+ZnO is preferably 30-42%, $Al_2O_3$+ZnO is more preferably 32-42%, $Al_2O_3$+ZnO is further preferably 35-40%;

3) $Al_2O_3$/ZnO is 1.0-3.0, $Al_2O_3$/ZnO is preferably 1.2-2.8, $Al_2O_3$/ZnO is more preferably 1.25-2.5, $Al_2O_3$/ZnO is further preferably 1.5-2.3;

4) $SiO_2/Al_2O_3$ is 1.5-3.2, $SiO_2/Al_2O_3$ is preferably 1.7-3.0, $SiO_2/Al_2O_3$ is more preferably 1.8-2.8, $SiO_2/Al_2O_3$ is further preferably 2.0-2.5;

5) $(TiO_2$+ZnO$)/Al_2O_3$ is 0.4-1.5, $(TiO_2$+ZnO$)/Al_2O_3$ is preferably 0.5-1.2, $(TiO_2$+ZnO$)/Al_2O_3$ is more preferably 0.6-1.0, $(TiO_2$+ZnO$)/Al_2O_3$ is further preferably 0.6-0.9;

6) $(Li_2O$+MgO$)/TiO_2$ is 0.3-8.0, $(Li_2O$+MgO$)/TiO_2$ is preferably 0.5-5.0, $(Li_2O$+MgO$)/TiO_2$ is more preferably 1.0-3.0, $(Li_2O$+MgO$)/TiO_2$ is further preferably 1.2-2.5;

7) $Al_2O_3/(MgO$+$TiO_2$) is 1.3-10.0, $Al_2O_3/(MgO$+$TiO_2$) is preferably 1.5-8.0, $Al_2O_3/(MgO$+$TiO_2$) is more preferably 2.5-6.5, $Al_2O_3/(MgO$+$TiO_2$) is further preferably 3.0-5.5.

(17) The microcrystalline glass product according to any of (1)-(15), wherein components thereof are represented by weight percentage, and one or more of the following 4 conditions are satisfied:

1) $(Al_2O_3$+$Ll_2O)/P_2O_5$ is 5.0-45.0, $(Al_2O_3$+$Li_2O)/P_2O_5$ is preferably 7.0-35.0, $(Al_2O_3$+$Li_2O)/P_2O_5$ is more preferably 8.0-30.0, $(Al_2O_3$+$Li_2O)/P_2O_5$ is further preferably 10.0-25.0;

2) $P_2O_5/ZrO_2$ is 0.1-5.0, $P_2O_5/ZrO_2$ is preferably 0.2-3.0, $P_2O_5/ZrO_2$ is more preferably 0.5-2.0, $P_2O_5/ZrO_2$ is further preferably 0.6-1.5;

3) $(SiO_2$+$Na_2O)/ZnO$ is 2.2-6.2, $(SiO_2$+$Na_2O)/ZnO$ is preferably 2.5-6.0, $(SiO_2$+$Na_2O)/ZnO$ is more preferably 2.8-5.5, $(SiO_2$+$Na_2O)/ZnO$ is further preferably 3.0-5.0;

4) $(Na_2O$+$K_2O)/ZnO$ is 0.8 or less, $(Na_2O$+$K_2O)/ZnO$ is preferably 0.6 or less, $(Na_2O$+$K_2O)/ZnO$ is more preferably 0.4 or less, $(Na_2O$+$K_2O)/ZnO$ is further preferably 0.2 or less.

(18) The microcrystalline glass product according to any of (1)-(15), wherein components thereof are represented by weight percentage, comprising: 45-53% of $SiO_2$, preferably 48-52% of $SiO_2$; and/or 18-25% of $Al_2O_3$, preferably 20-23% of $Al_2O_3$; and/or 1-5% of $Li_2O$, preferably 2-4% of $Li_2O$; and/or 11-18% of ZnO, preferably 12-16% of ZnO; and/or 1-5% of MgO, preferably 2-4% of MgO; and/or 1-6% of $TiO_2$, preferably 2-5% of $TiO_2$; and/or 0.1-7% of $P_2O_5$ +$ZrO_2$, preferably 0.5-5% of $P_2O_5$+$ZrO_2$; and/or 0-4% of $Na_2O$, preferably 0-2% of $Na_2O$; and/or 0-2% of $B_2O_3$, preferably 0-1% of $B_2O_3$; and/or 0-2% of $K_2O$, preferably 0-1% of $K_2O$; and/or 0-4% of CaO+BaO+SrO, preferably 0-2% of CaO+BaO+SrO; and/or 0-4% of $Y_2O_3$, preferably 0-2% of $Y_2O_3$; and/or 0-1% of clarifying agent, preferably 0-0.5% of clarifying agent.

(19) The microcrystalline glass product according to any of (1)-(15), wherein components thereof are represented by weight percentage, comprising: 0-5% of $P_2O_5$, preferably 0.5-4% of $P_2O_5$, more preferably 1-3% of $P_2O_5$; and/or 0-5% of $ZrO_2$, preferably 0.5-4% of $ZrO_2$, more preferably 1-3% of $ZrO_2$.

(20) The microcrystalline glass product according to any of (1)-(15), wherein the microcrystalline glass product comprises spinel crystalline phase, preferably the spinel crystalline phase has a higher weight percentage than other crystalline phases, more preferably the spinel crystalline phase accounts for 20-60% of the microcrystalline glass product by weight percentage, further preferably the spinel crystalline phase accounts for 25-50% of the microcrystalline glass product by weight percentage, more further preferably the spinel crystalline phase accounts for 25-45% of the microcrystalline glass product by weight percentage, and furthermore preferably the spinel crystalline phase accounts for 30-45% of the microcrystalline glass product by weight percentage.

(21) The microcrystalline glass product according to any of (1)-(15), wherein the microcrystalline glass product comprises quartz crystalline phase, preferably the quartz crystalline phase accounts for 20% or less of the microcrystalline glass product by weight percentage, more preferably the quartz crystalline phase accounts for 10% or less of the microcrystalline glass product by weight percentage, further preferably the quartz crystalline phase accounts for 5% or less of the microcrystalline glass product by weight percentage, more further preferably the quartz crystalline phase is not contained in the microcrystalline glass product.

(22) The microcrystalline glass product according to any of (1)-(14), wherein components thereof are represented by weight percentage, comprising: 0-5% of $La_2O_3$+$Gd_2O_3$+$Yb_2O_3$+$Nb_2O_5$+$WO_3$+$Bi_2O_3$+$Ta_2O_5$+$TeO_2$, preferably 0-2%

of $La_2O_3+Gd_2O_3+Yb_2O_3+Nb_2O_5+WO_3+Bi_2O_3+Ta_2O_5+TeO_2$, more preferably 0-1% of $La_2O_3+Gd_2O_3+Yb_2O_3+Nb_2O_5+WO_3+Bi_2O_3+Ta_2O_5+TeO_2$; it further preferably contains no $La_2O_3$; and/or do not contain $Gd_2O_3$; and/or do not contain $Yb_2O_3$; and/or do not contain $Nb_2O_5$, and/or do not contain $WO_3$; and/or do not contain $Bi_2O_3$; and/or do not contain $Ta_2O_5$; and/or do not contain $TeO_2$.

(23) The microcrystalline glass product according to any of (1)-(15), wherein a grain size of the microcrystalline glass product is 60nm or less, preferably 45nm or less, more preferably 10-30nm; and/or a depth of an ion exchange layer is 75μm or more, preferably 80-150μm, more preferably 100-125μm; and/or a surface stress is 200MPa or more, preferably 250-400MPa, more preferably 300-400MPa; and/or a drop ball test height is 1000mm or more, preferably 1200mm or more, more preferably 1500mm or more; and/or a drop resistance is 1200mm or more, preferably 1300mm or more, more preferably 1400mm or more; and/or a fracture toughness is $1.0MPa \cdot m^{1/2}$ or more, preferably $1.2MPa \cdot m^{1/2}$ or more, more preferably $1.2-1.6MPa \cdot m^{1/2}$; and/or a four-point bending strength is 500MPa or more, preferably 600MPa or more, more preferably 700-1000MPa; and/or a compressive strength is 400N or more, preferably 400-550N, more preferably 450-550N; and/or Vickers hardness is $650kgf/mm^2$ or more, preferably $660kgf/mm^2$ or more, more preferably $680-750kgf/mm^2$.

(24) The microcrystalline glass product according to any of (1)-(15), wherein the haze of the microcrystalline glass product with a thickness of 1mm or less is 0.3% or less, preferably 0.25% or less, more preferably 0.05-0.2%; and/or average light transmittance at 400-800nm wavelength is 87.0% or more, preferably 88.5% or more, more preferably 89.5% or more; and/or light transmittance at 550nm wavelength is 87.0% or more, preferably 88.0% or more, more preferably 89.0% or more; and/or average light |B| value at 400-800nm is 1.0 or less, preferably 0.8 or less, more preferably 0.3-0.6.

(25) The microcrystalline glass product according to (24), wherein the thickness of the microcrystalline glass product is 0.2-1mm, preferably 0.3-0.9mm, more preferably 0.5-0.8mm, further preferably 0.55mm or 0.6mm or 0.68mm or 0.7mm or 0.75mm.

(26) The microcrystalline glass product according to any of (1)-(14), wherein components thereof are represented by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

(27) The microcrystalline glass product according to any of (1)-(14), wherein components thereof are represented by weight percentage, comprising: 0.1-4% of NiO; and/or 0.1-4% of $Ni_2O_3$; and/or 0.05-2% of CoO; and/or 0.05-2% of $Co_2O_3$; and/or 0.2-7% of $Fe_2O_3$; and/or 0.1-4% of $MnO_2$; and/or 0.4-8% of $Fr_2O_3$; and/or 0.4-8% of $Nd_2O_3$; and/or 0.5-4% of $Cu_2O$; and/or 0.4-8% of $Pr_2O_3$; and/or 0.5-4% of $CeO_2$.

(28) The microcrystalline glass product according to any of (1)-(14), wherein components thereof are represented by weight percentage, comprising: 0.1-3% of NiO; and/or 0.1-3% of $Ni_2O_3$; and/or 0.05-1.8% of CoO; and/or 0.05-1.8% of $Co_2O_3$; and/or 0.2-5% of $Fe_2O_3$; and/or 0.1-3% of $MnO_2$; and/or 0.4-6% of $Er_2O_3$; and/or 0.4-6% of $Nd_2O_3$; and/or 0.5-3% of $Cu_2O$; and/or 0.4-6% of $Pr_2O_3$; and/or 0.5-3% of $CeO_2$.

(29) The microcrystalline glass product according to any of (1)-(14), wherein components thereof are represented by weight percentage, comprising: 0.1-3% of NiO; and/or 0.1-3% of $Ni_2O_3$.

(30) The microcrystalline glass product according to any of (1)-(14), wherein components thereof are represented by weight percentage, comprising: CoO: 0.05-1.8%; and/or $Co_2O_3$: 0.05-1.8%.

(31) The microcrystalline glass product according to any of (1)-(14), wherein components thereof are represented by weight percentage, comprising:0.5-3% of $Cu_2O$; and/or 0.5-3% of $CeO_2$.

(32) The microcrystalline glass product according to any of (1)-(14), wherein components thereof are represented by weight percentage, comprising: 0.2-5% of $Fe_2O_3$; 0.05-0.3% of CoO; or 0.2-5% of $Fe_2O_3$; 0.05-0.3% of $Co_2O_3$; or 0.2-5% of $Fe_2O_3$; 0.05-0.3% of CoO; 0.1-1% of NiO; or 0.2-5% of $Fe_2O_3$; 0.05-0.3% of $Co_2O_3$; 0.1-1% of NiO.

(33) The microcrystalline glass product according to any of (1)-(14), wherein components thereof are represented by weight percentage, comprising: 0.4-6% of $Pr_2O_3$; or 0.2-5% of $Fe_2O_3$; or 0.1-3% of $MnO_2$; or 0.4-6% of $Fr_2O_3$; or 0.4-6% of $Nd_2O_3$.

(34) The microcrystalline glass product according to any of (1)-(14), wherein components thereof are represented by weight percentage, comprising: $Er_2O_3$: 0.4-6%, $Nd_2O_3$: 0.4-4%, $MnO_2$: 0.1-2%.

(35) A microcrystalline glass, wherein components thereof are represented by weight percentage, comprising: 40-55% of $SiO_2$; 15-30% of $Al_2O_3$; 0.1-6% of $Li_2O$; 9-20% of ZnO; 0.1-6% of MgO; and 0.5-7% $TiO_2$.

(36) The microcrystalline glass according to (35), wherein components thereof are represented by weight percentage, further comprising: 0-8% of $P_2O_5+ZrO_2$; and/or 0-6% of $Na_2O$; and/or 0-4% of $B_2O_3$; and/or 0-3% of $K_2O$; and/or 0-5% of CaO+BaO+SrO; and/or 0-6% of $Y_2O_3$; and/or 0-2% of clarifying agent.

(37) A microcrystalline glass, wherein components thereof comprise $SiO_2$, $Al_2O_3$, ZnO, and $TiO_2$, the microcrystalline glass comprises spinel crystalline phase, and Vickers hardness of the microcrystalline glass is $550kgf/mm^2$ or more.

(38) A microcrystalline glass, wherein components thereof comprise $SiO_2$, $Al_2O_3$, $Li_2O$, ZnO, and $TiO_2$, and the microcrystalline glass comprises spinel crystalline phase.

(39) A microcrystalline glass, comprising spinel crystalline phase, wherein a grain size of the microcrystalline glass is 60nm or less.

(40) A microcrystalline glass, wherein components thereof comprise $SiO_2$, $Al_2O_3$, $Li_2O$, $ZnO$, and $TiO_2$, and haze of the microcrystalline glass with a thickness of 1mm or less is 0.3% or less.

(41) A microcrystalline glass, comprising spinel crystalline phase, wherein light transmittance at 550nm wavelength of the microcrystalline glass with a thickness of 1mm or less is 87.0% or more.

(42) A microcrystalline glass, wherein components thereof comprise $SiO_2$, $Al_2O_3$, $Li_2O$, $ZnO$, and $TiO_2$, and Young's modulus of the microcrystalline glass is 80-110GPa.

(43) A microcrystalline glass, wherein components thereof comprise $SiO_2$, $Al_2O_3$, $Li_2O$, and $ZnO$, and an average light |B| value at 400-800nm of the microcrystalline glass with a thickness of 1mm or less is 1.0 or less.

(44) A microcrystalline glass, wherein components thereof comprise $SiO_2$, $Al_2O_3$, and $ZnO$, and average light transmittance at 400-800nm wavelength of the microcrystalline glass with a thickness of 1mm or less is 87.0% or more.

(45) The microcrystalline glass according to any of (37)-(44), wherein components thereof are represented by weight percentage, comprising: 40-55% of $SiO_2$; and/or 15-30% of $Al_2O_3$; and/or 0.1-6% of $Li_2O$; and/or 9-20% of $ZnO$; and/or 0.1-6% of $MgO$; and/or 0.5-7% of $TiO_2$; and/or 0-8% of $P_2O_5+ZrO_2$; and/or 0-6% of $Na_2O$; and/or 0-4% of $B_2O_3$; and/or 0-3% of $K_2O$; and/or 0-5% of $CaO+BaO+SrO$; and/or 0-6% of $Y_2O_3$; and/or 0-2% of clarifying agent.

(46) A microcrystalline glass, wherein components thereof are represented by weight percentage, consisting of: 40-55% of $SiO_2$; 15-30% of $Al_2O_3$; 0.1-6% of $Li_2O$; 9-20% of $ZnO$; 0.1-6% of $MgO$; 0.5-7% of $TiO_2$; 0-8% of $P_2O_5+ZrO_2$; 0-6% of $Na_2O$; 0-4% of $B_2O_3$; 0-3% of $K_2O$; 0-5% of $CaO+BaO+SrO$; 0-6% of $Y_2O_3$; 0-2% of clarifying agent.

(47) The microcrystalline glass according to any of (35)-(46), wherein components thereof are represented by weight percentage, and one or more of the following 7 conditions are satisfied:

1) $Li_2O/TiO_2$ is 0.2-4.5, $Li_2O/TiO_2$ is preferably 0.5-3.5, $Li_2O/TiO_2$ is more preferably 0.7-2.5, $Li_2O/TiO_2$ is further preferably 0.75-1.5;

2) $Al_2O_3+ZnO$ is 26-45%, $Al_2O_3+ZnO$ is preferably 30-42%, $Al_2O_3+ZnO$ is more preferably 32-42%, $Al_2O_3+ZnO$ is further preferably 35-40%;

3) $Al_2O_3/ZnO$ is 1.0-3.0, $Al_2O_3/ZnO$ is preferably 1.2-2.8, $Al_2O_3/ZnO$ is more preferably 1.25-2.5, $Al_2O_3/ZnO$ is further preferably 1.5-2.3;

4) $SiO_2/Al_2O_3$ is 1.5-3.2, $SiO_2/Al_2O_3$ is preferably 1.7-3.0, $SiO_2/Al_2O_3$ is more preferably 1.8-2.8, $SiO_2/Al_2O_3$ is further preferably 2.0-2.5;

5) $(TiO_2+ZnO)/Al_2O_3$ is 0.4-1.5, $(TiO_2+ZnO)/Al_2O_3$ is preferably 0.5-1.2, $(TiO_2+ZnO)/Al_2O_3$ is more preferably 0.6-1.0, $(TiO_2+ZnO)/Al_2O_3$ is further preferably 0.6-0.9;

6) $(Li_2O+MgO)/TiO_2$ is 0.3-8.0, $(Li_2O+MgO)/TiO_2$ is preferably 0.5-5.0, $(Li_2O+MgO)/TiO_2$ is more preferably 1.0-3.0, $(Li_2O+MgO)/TiO_2$ is further preferably 1.2-2.5;

7) $Al_2O_3/(MgO+TiO_2)$ is 1.3-10.0, $Al_2O_3/(MgO+TiO_2)$ is preferably 1.5-8.0, $Al_2O_3/(MgO+TiO_2)$ is more preferably 2.5-6.5, $Al_2O_3/(MgO+TiO_2)$ is further preferably 3.0-5.5.

(48) The microcrystalline glass according to any of (35)-(46), wherein components thereof are represented by weight percentage, and one or more of the following 4 conditions are satisfied:

1) $(Al_2O_3+Li_2O)/P_2O_5$ is 5.0-45.0, $(Al_2O_3+Li_2O)/P_2O_5$ is preferably 7.0-35.0, $(Al_2O_3+Li_2O)/P_2O_5$ is more preferably 8.0-30.0, $(Al_2O_3+Li_2O)/P_2O_5$ is further preferably 10.0-25.0;

2) $P_2O_5/ZrO_2$ is 0.1-5.0, $P_2O_5/ZrO_2$ is preferably 0.2-3.0, $P_2O_5/ZrO_2$ is more preferably 0.5-2.0, $P_2O_5/ZrO_2$ is further preferably 0.6-1.5;

3) $(SiO_2+Na_2O)/ZnO$ is 2.2-6.2, $(SiO_2+Na_2O)/ZnO$ is preferably 2.5-6.0, $(SiO_2+Na_2O)/ZnO$ is more preferably 2.8-5.5, $(SiO_2+Na_2O)/ZnO$ is further preferably 3.0-5.0;

4) $(Na_2O+K_2O)/ZnO$ is 0.8 or less, $(Na_2O+K_2O)/ZnO$ is preferably 0.6 or less, $(Na_2O+K_2O)/ZnO$ is more preferably 0.4 or less, $(Na_2O+K_2O)/ZnO$ is further preferably 0.2 or less.

(49) The microcrystalline glass according to any of (35)-(46), wherein components thereof are represented by weight percentage, comprising: 45-53% of $SiO_2$, preferably 48-52% of $SiO_2$; and/or 18-25% of $Al_2O_3$, preferably 20-23% of $Al_2O_3$; and/or 1-5% of $Li_2O$, preferably 2-4% of $Li_2O$; and/or 11-18% of $ZnO$, preferably 12-16% of $ZnO$; and/or 1-5% of $MgO$, preferably 2-4% of $MgO$; and/or 1-6% of $TiO_2$, preferably 2-5% of $TiO_2$; and/or 0.1-7% of $P_2O_5+ZrO_2$, preferably 0.5-5% of $P_2O_5+ZrO_2$; and/or 0-4% of $Na_2O$, preferably 0-2% of $Na_2O$; and/or 0-2% of $B_2O_3$, preferably 0-1% of $B_2O_3$; and/or 0-2% of $K_2O$, preferably 0-1% of $K_2O$; and/or 0-4% of $CaO+BaO+SrO$, preferably 0-2% of $CaO+BaO+SrO$; and/or 0-4% of $Y_2O_3$, preferably 0-2% of $Y_2O_3$; and/or 0-1% of clarifying agent, preferably 0-0.5% of clarifying agent.

(50) The microcrystalline glass according to any of (35)-(46), wherein components thereof are represented by weight percentage, comprising: 0-5% of $P_2O_5$, preferably 0.5-4% of $P_2O_5$, more preferably 1-3% of $P_2O_5$; and/or 0-5% of $ZrO_2$, preferably 0.5-4% of $ZrO_2$, more preferably 1-3% of $ZrO_2$.

(51) The microcrystalline glass according to any of (35)-(46), wherein the microcrystalline glass comprises spinel crystalline phase, preferably the spinel crystalline phase has a higher weight percentage than other crystalline phases, more preferably the spinel crystalline phase accounts for 20-60% of the microcrystalline glass by weight percentage, further preferably the spinel crystalline phase accounts for 25-50% of the microcrystalline glass by weight percentage, more further preferably the spinel crystalline phase accounts for 25-45% of the microcrystalline glass by weight percentage, and furthermore preferably the spinel crystalline phase accounts for 30-45% of the microcrystalline glass by weight percentage.

(52) The microcrystalline glass according to any of (35)-(46), wherein the microcrystalline glass comprises quartz crystalline phase, preferably the quartz crystalline phase accounts for 20% or less of the microcrystalline glass by weight percentage, more preferably the quartz crystalline phase accounts for 10% or less of the microcrystalline glass by weight percentage, further preferably the quartz crystalline phase accounts for 5% or less of the microcrystalline glass by weight percentage, more further preferably the quartz crystalline phase is not contained in the microcrystalline glass.

(53) The microcrystalline glass according to any of (35)-(45), wherein components thereof are represented by weight percentage, comprising: 0-5% of $La_2O_3+Gd_2O_3+Yb_2O_3+Nb_2O_5+WO_3+Bi_2O_3+Ta_2O_5+TeO_2$; $La_2O_3+Gd_2O_3+Yb_2O_3+Nb_2O_5+WO_3+Bi_2O_3+Ta_2O_5+T_5O_2$ is preferably 0-2%, $La_2O_3+Gd_2O_3+Yb_2O_3+Nb_2O_5+WO_3+Bi_2O_3+Ta_2O_5+TeO_2$ is more preferably 0-1%; it further preferably contains no $La_2O_3$; and/or do not contain $Gd_2O_3$; and/or do not contain $Yb_2O_3$; and/or do not contain $Nb_2O_5$; and/or do not contain $WO_3$; and/or do not contain $Bi_2O_3$; and/or do not contain $Ta_2O_5$; and/or do not contain $TeO_2$.

(54) The microcrystalline glass according to any of (35)-(46), wherein a grain size of the microcrystalline glass is 60nm or less, preferably 45nm or less, more preferably 10-30nm; and/or Young's modulus is 80-110GPa, preferably 85-105GPa, more preferably 90-105GPa; and/or Vickers hardness is 550kgf/mm$^2$ or more, preferably 580kgf/mm$^2$ or more, more preferably 600-650kgf/mm$^2$.

(55) The microcrystalline glass according to any of (35)-(46), wherein the haze of the microcrystalline glass with a thickness of 1mm or less is 0.3% or less, preferably 0.25% or less, more preferably 0.05-0.2; and/or average light transmittance at 400-800nm wavelength is 87.0% or more, preferably 88.5% or more, more preferably 89.5% or more; and/or light transmittance at 550nm wavelength is 87.0% or more, preferably 88.0% or more, more preferably 89.0% or more; and/or average light |B| value at 400-800nm is 1.0 or less, preferably 0.8 or less, more preferably 0.3-0.6.

(56) The microcrystalline glass according to (55), wherein the thickness of the microcrystalline glass is 0.2-1mm, preferably 0.3-0.9mm, more preferably 0.5-0.8mm, further preferably 0.55mm or 0.6mm or 0.68mm or 0.7mm or 0.75mm.

(57) The microcrystalline glass according to any of (35)-(45), wherein components thereof are represented by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

(58) The microcrystalline glass according to any of (35)-(45), wherein components thereof are represented by weight percentage, comprising: 0.1-4% of NiO; and/or 0.1-4% of $Ni_2O_3$; and/or 0.05-2% of CoO; and/or 0.05-2% of $Co_2O_3$; and/or 0.2-7% of $Fe_2O_3$; and/or 0.1-4% of $MnO_2$; and/or 0.4-8% of $Er_2O_3$; and/or 0.4-8% of $Nd_2O_3$; and/or 0.5-4% of $Cu_2O$; and/or 0.4-8% of $Pr_2O_3$; and/or 0.5-4% of $CeO_2$.

(59) The microcrystalline glass according to any of (35)-(45), wherein components thereof are represented by weight percentage, comprising: 0.1-3% of NiO; and/or 0.1-3% of $Ni_2O_3$; and/or 0.05-1.8% of CoO; and/or 0.05-1.8% of $Co_2O_3$; and/or 0.2-5% of $Fe_2O_3$; and/or 0.1-3% of $MnO_2$; and/or 0.4-6% of $Er_2O_3$; and/or 0.4-6% of $Nd_2O_3$; and/or 0.5-3% of $Cu_2O$; and/or 0.4-6% of $Pr_2O_3$; and/or 0.5-3% of $CeO_2$.

(60) The microcrystalline glass according to any of (35)-(45), wherein components thereof are represented by weight percentage, comprising: 0.1-3% of NiO; and/or 0.1-3% of $Ni_2O_3$.

(61) The microcrystalline glass according to any of (35)-(45), wherein components thereof are represented by weight percentage, comprising: 0.05-1.8% of CoO; and/or 0.05-1.8% of $Co_2O_3$.

(62) The microcrystalline glass according to any of (35)-(45), wherein components thereof are represented by weight percentage, comprising: $Cu_2O$: 0.5-3%; and/or $CeO_2$: 0.5-3%.

(63) The microcrystalline glass according to any of (35)-(45), wherein components thereof are represented by weight percentage, comprising: 0.2-5% of $Fe_2O_3$; 0.05-0.3% of CoO; or 0.2-5% of $Fe_2O_3$; 0.05-0.3% of $Co_2O_3$; or 0.2-5% of $Fe_2O_3$; 0.05-0.3% of CoO; 0.1-1% of NiO; or 0.2-5% of $Fe_2O_3$; 0.05-0.3% of $Co_2O_3$; 0.1-1% of NiO.

(64) The microcrystalline glass according to any of (35)-(45), wherein components thereof are represented by weight percentage, comprising: 0.4-6% of $Pr_2O_3$; or 0.2-5% of $Fe_2O_3$; or 0.1-3% of $MnO_2$; or 0.4-6% of $Er_2O_3$; or 0.4-6% of $Nd_2O_3$.

(65) The microcrystalline glass according to any of (35)-(45), wherein components thereof are represented by weight

percentage, comprising: $Er_2O_3$: 0.4-6%, $Nd_2O_3$: 0.4-4%, $MnO_2$: 0.1-2%.

(66) A microcrystalline glass former, comprising the microcrystalline glass according to any of (35)-(65).

(67) A glass cover plate, comprising the microcrystalline glass product according to any of (1)-(34), and/or the microcrystalline glass according to any of (35)-(65), and/or the microcrystalline glass former according to (66).

(68) A glass component, comprising the microcrystalline glass product according to any of (1)-(34), and/or the microcrystalline glass according to any of (35)-(65), and/or the microcrystalline glass former according to (66).

(69) An electronic device, comprising the microcrystalline glass product according to any of (1)-(34), and/or the microcrystalline glass according to any of (35)-(65), and/or the microcrystalline glass former according to (66), and/or the glass cover plate according to (67), and/or the glass component according to (68).

(70) A display device, comprising the microcrystalline glass product according to any of (1)-(34), and/or the microcrystalline glass according to any of (35)-(65), and/or the microcrystalline glass former according to (66), and/or the glass cover plate according to (67), and/or the glass component according to (68).

(71) A manufacturing method of the microcrystalline glass product according to any of (1)-(34), wherein the method comprises the following steps: forming a matrix glass, forming the matrix glass into a microcrystalline glass through a crystallization process, and then forming the microcrystalline glass into a microcrystalline glass product through a chemical strengthening process.

(72) The manufacturing method for the microcrystalline glass product according to (71), wherein forming the matrix glass comprises the following steps: mixing raw materials uniformly according to component proportion, placing the mixture into a crucible, melting in an electric furnace or gas furnace within a temperature range of 1350-1550°C for 5-24 hours, preferably at 1450-1550°C, and then obtaining the matrix glass after clarifying, homogenizing, molding, and annealing, wherein the clarification temperature is greater than 1550°C but less than or equal to 1650°C, and the annealing temperature is 450-600°C.

(73) The manufacturing method of the microcrystalline glass product according to (71), wherein the crystallization process comprises the following steps: heating up to a specified crystallization treatment temperature, holding the temperature for a certain time after reaching the crystallization treatment temperature, and then performing cooling, wherein the crystallization treatment temperature is 600-800°C, preferably 650-750°C, and holding time under the crystallization treatment temperature is 1-10 hours, preferably 3-6 hours.

(74) The manufacturing method for the microcrystalline glass product according to (71), wherein the crystallization process comprises the following steps: performing nucleation process treatment under a first temperature, and then performing crystal growth process treatment under a second temperature.

(75) The manufacturing method for the microcrystalline glass product according to (74), wherein the crystallization process comprises: the first temperature is 600-700°C, and the second temperature is greater than 700°C but less than or equal to 800°C; a holding time under the first temperature is 1-6 hours; and a holding time under the second temperature is 2-5 hours.

(76) The manufacturing method for the microcrystalline glass product according to (71), wherein the chemical strengthening process comprises: immersing the microcrystalline glass into a salt bath of molten Na salt at a temperature of 350-470°C for 1-36 hours, wherein the temperature range is preferably 400-460°C, and the time range is preferably 2-15 hours; and/or immersing the microcrystalline glass into a mixed salt bath of molten K salt and Na salt at a temperature of 360°C-450°C for 1-36 hours, wherein the time range is preferably 2-24 hours.

(77) A manufacturing method of the microcrystalline glass according to any of (35)-(65), wherein the method comprises the following steps: forming a matrix glass, and then forming the matrix glass into a microcrystalline glass through a crystallization process.

(78) The manufacturing method for the microcrystalline glass according to (77), wherein forming the matrix glass comprises the following steps: mixing raw materials uniformly according to component proportion, placing the mixture into a crucible, melting in an electric furnace or gas furnace within a temperature range of 1350-1550°C for 5-24 hours, preferably at 1450-1550°C, and then obtaining the matrix glass after clarifying, homogenizing, molding, and annealing, wherein the clarification temperature is greater than 1550°C but less than or equal to 1650°C, and the annealing temperature is 450-600°C.

(79) The manufacturing method of the microcrystalline glass according to (77), wherein the crystallization process comprises the following steps: heating up to a specified crystallization treatment temperature, holding the temperature for a certain time after reaching the crystallization treatment temperature, and then performing cooling, wherein the crystallization treatment temperature is 600-800°C, preferably 650-750°C, and holding time under the crystallization treatment temperature is 1-10 hours, preferably 3-6 hours.

(80) The manufacturing method for the microcrystalline glass product according to (77), wherein the crystallization process comprises the following steps: performing nucleation process treatment under a first temperature, and then performing crystal growth process treatment under a second temperature.

(81) The manufacturing method for the microcrystalline glass product according to (80), wherein the crystallization process comprises: the first temperature is 600-700°C, and the second temperature is greater than 700°C but less than or equal to 800°C; a holding time under the first temperature is 1-6 hours; and a holding time under the second temperature is 2-5 hours.

(82) A manufacturing method of the microcrystalline glass former according to (66), wherein the method comprises: grinding or polishing the microcrystalline glass into a microcrystalline glass former, or making the matrix glass or microcrystalline glass into the microcrystalline glass former through hot bending process or pressing process at a certain temperature.

(83) The manufacturing method of the microcrystalline glass former according to (82), wherein the method comprises the following steps: performing a crystallization heat treatment process once for the matrix glass, including heating, heat preservation and nucleation, heating, heat preservation and crystallization, cooling to room temperature, and forming a precrystallized glass; and thermally processing the precrystallized glass to obtain the microcrystalline glass former.

(84) The manufacturing method of the microcrystalline glass former according to (82), wherein the method comprises the following steps:

1) heating and warm-up: placing the matrix glass or precrystallized glass or microcrystalline glass into a mould, and making the mould pass through each heating site in a hot bending machine successively and stay at each site for a certain time for heat preservation, wherein temperature of warm-up zone is 400-800°C, pressure is 0.01-0.05MPa, and time is 40-200s;

2) pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s;

3) pressure holding and cooling: transferring the mould to a cooling site to cool down site by site, wherein cooling temperature range is 750-500°C, the pressure is 0.01-0.05Mpa, and the time is 40-200s.

The beneficial effects of the present invention are as follows: through rational component design, the microcrystalline glass or microcrystalline glass product obtained by the present invention has excellent mechanical performance and is applicable to display devices or electronic devices.

Detailed Description

The microcrystalline glass and microcrystalline glass product provided by the present invention are materials with crystalline phase (sometimes also called crystal) and glass phase. The crystalline phase of the microcrystalline glass and microcrystalline glass product can be identified by peak angles appeared in X-ray diffraction pattern of X-ray diffraction analysis and/or measured by TEMEDX.

Through repeated tests and researches, the inventor of the present invention obtains the microcrystalline glass or microcrystalline glass product provided by the present invention by specifying the content and proportion of specific ingredients constituting the microcrystalline glass and microcrystalline glass product as specific values and making the specific ingredients contain specific crystalline phases.

In the following paragraphs, the range of components (ingredients) of the matrix glass, microcrystalline glass and microcrystalline glass product provided by the present invention will be described. If not specified herein, the content of each component is expressed in weight percentage (wt%) relative to the total content of the matrix glass or microcrystalline glass or microcrystalline glass product converted into oxide composition. "Converted into oxide composition" therein refers to that the total content of this oxide is taken as 100% when the oxide, compound salt and hydroxide, used as raw materials for the composition of the matrix glass, microcrystalline glass or microcrystalline glass product provided by the present invention, are decomposed and transformed into oxides during melting. In addition, in this description, only the matrix glass before crystallization (i.e., crystallization process treatment) is referred to as glass, the crystallized (i.e., crystallization process treatment) matrix glass is referred to as microcrystalline glass, and the microcrystalline glass product refers to that obtained by chemical strengthening of the microcrystalline glass.

Unless otherwise noted in specific circumstances, the numerical range listed herein includes upper and lower limits, and the words "or more" and "or less" include the endpoint values as well as all integers and fractions within the range, but not limited to the specific values listed when the range is limited. The term "about" as used herein refers to that formulations, parameters and other quantities as well as characteristics are not, and do not need to be, accurate, and may be approximate and/or greater or lower if necessary, reflecting tolerances, conversion factors, measurement errors, etc. "And/or" mentioned herein is inclusive. For example, "A and/or B" refers to only A, or only B, or both A and B.

In some implementations of the present invention, the crystalline phase in the microcrystalline glass or microcrystalline glass product comprises spinel crystalline phase. Preferably, the spinel crystalline phase comprises zinc-aluminum spinel crystalline phase ($ZnAl_2O_4$). In some implementations, the spinel crystalline phase has a higher weight percentage than other crystalline phases. In some implementations, the spinel crystalline phase accounts for 20-60% of the microcrystalline glass or microcrystalline glass product by weight percentage, preferably the spinel crystalline phase accounts for 25-50% of the microcrystalline glass or microcrystalline glass product by weight percentage, more preferably the spinel crystalline phase accounts for 25-45% of the microcrystalline glass or microcrystalline glass product by weight percentage, and further preferably the spinel crystalline phase accounts for 30-45% of the microcrystalline glass or microcrystalline glass product by weight percentage. In some implementations, the spinel crystalline phase accounts for 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60% of the microcrystalline glass or microcrystalline glass product by weight percentage.

In some implementations of the present invention, the crystalline phase in the microcrystalline glass or microcrystalline glass product comprises quartz crystalline phase (including both quartz and quartz solid solution cases), preferably, the quartz crystalline phase comprises β-quartz solid solution. In some implementations, the quartz crystalline phase accounts for 20% or less of the microcrystalline glass or microcrystalline glass product by weight percentage, preferably the quartz crystalline phase accounts for 10% or less of the microcrystalline glass or microcrystalline glass product by weight percentage, and more preferably the quartz crystalline phase accounts for 5% or less of the microcrystalline glass or microcrystalline glass product by weight percentage. In some implementations, further preferably the quartz crystalline phase is not contained in the microcrystalline glass or microcrystalline glass product. In some implementations, the quartz crystalline phase accounts for 0%, greater than 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, 20% of the microcrystalline glass or microcrystalline glass product by weight percentage.

$SiO_2$ serves as the network former of the microcrystalline glass and microcrystalline glass product provided by the present invention. $SiO_2$ can form a network structure through the structural units of silicon-oxygen tetrahedron, constituting the basic structure of silicate. In some implementations, $SiO_2$ is also an essential component for forming the quartz crystalline phase. If the content of $SiO_2$ is too low, the chemical stability of the microcrystalline glass and microcrystalline glass product deteriorates; if the content of $SiO_2$ is too high, the viscosity of the glass greatly increases, which raises the melting temperature, causes difficulties in material melting, and increases the difficulty of matrix glass molding. Therefore, the content of $SiO_2$ in the present invention is confined to 40-55%, preferably 45-53%, more preferably 48-52%. In some implementations, it can comprise about 40%, 40.5%, 41%, 41.5%, 42%, 42.5%, 43%, 43.5%, 44%, 44.5%, 45%, 45.5%, 46%, 46.5%, 47%, 47.5%, 48%, 48.5%, 49%, 49.5%, 50%, 50.5%, 51%, 51.5%, 52%, 52.5%, 53%, 53.5%, 54%, 54.5% or 55% of $SiO_2$.

$Al_2O_3$ is beneficial for improving the mechanical performance and chemical stability of the microcrystalline glass and microcrystalline glass product provided by the present invention, and is also an essential component for forming the spinel crystalline phase. $Al_2O_3$ can form $[AlO_4]$ tetrahedron, which replaces part of the $[SiO_4]$ tetrahedron to form a network structure. The molecular volume of the $[AlO_4]$ tetrahedron is $41cm^3/mol$, and the molecular volume of the $[SiO_4]$ tetrahedron is $27.2cm^3/mol$. Replacing part of the $[SiO_4]$ tetrahedron with the $[AlO_4]$ tetrahedron increases the molecular volume and expands the network structure space, which is beneficial for the diffusion of alkali metal ions during chemical strengthening and also facilitates the acceptance of a large amount of $Na^+$, promoting ion exchange. If the content of $Al_2O_3$ is too low, it is unfavorable for improving the strengthening effect and crystal precipitation, resulting in poor mechanical performance and chemical stability of the glass. If the content of $Al_2O_3$ is too high, the glass melting becomes difficult, the melting temperature is high, and surface crystallization tends to occur during molding. Therefore, the content of $Al_2O_3$ is 15-30%, preferably 18-25%, more preferably 20-23%. In some implementations, it can comprise about 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5% or 30% of $Al_2O_3$.

In some implementations, the ratio of $SiO_2$ to $Al_2O_3$, i.e., $SiO_2/Al_2O_3$, is controlled within the range of 1.5-3.2, which is beneficial for improving the drop ball test height and four-point bending strength of the microcrystalline glass and microcrystalline glass product, as well as increasing the depth of the ion exchange layer and surface stress of the microcrystalline glass product. Therefore, $SiO_2/Al_2O_3$ is preferably 1.5-3.2, $SiO_2/Al_2O_3$ is more preferably 1.7-3.0, $SiO_2/Al_2O_3$ is further preferably 1.8-2.8, $SiO_2/Al_2O_3$ is more further preferably 2.0-2.5. In some implementations, the value of $SiO_2/Al_2O_3$ is 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3.0, 3.05, 3.1, 3.15 or 3.2.

$Li_2O$ can reduce the melting point of the glass, and is also an essential component for participating in chemical strengthening and improving the mechanical performance of the microcrystalline glass product. In another aspect, $Li_2O$ can provide free oxygen and reduce the coloration caused by $TiO_2$. If the content of $Li_2O$ is too high, the crystals in the microcrystalline glass and microcrystalline glass product are prone to growth, and the crystal growth is unstable, affecting the transmittance of the microcrystalline glass and microcrystalline glass product and deteriorating the chemical stability. Therefore, the content of $Li_2O$ is 0.1-6%, preferably 1-5%, more preferably 2-4%. In some implementations, it can comprise about 0.1%, 0.2%, 0.3%, 0.4%, 0.5%, 1%, 1.5%, 2%, 2.5%, 3%, 3.5%, 4%, 4.5%, 5%, 5.5% or 6% of $Li_2O$.

ZnO is an essential component for forming the spinel crystalline phase in the present invention. By controlling the content of ZnO and $Al_2O_3$, the content of the spinel crystalline phase can be adjusted to take the transmittance into account while ensuring the mechanical strength. If the content of ZnO is low, the content of crystalline phase in the microcrystalline glass and microcrystalline glass product is low, and the mechanical performance such as Vickers hardness and Young's modulus are poor. If the content of ZnO is too high, residual $Zn^{2+}$ in the glass phase hinders the ion exchange during chemical strengthening, which is unfavorable for obtaining high-performance microcrystalline glass products. Therefore, the content of ZnO is 9-20%, preferably 11-18%, more preferably 12-16%. In some implementations, it can comprise about 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5% or 20% of ZnO.

In some implementations, the total content of $Al_2O_3$ and ZnO, i.e., $Al_2O_3$+ZnO, is controlled within the range of 26-45%, which helps the microcrystalline glass and microcrystalline glass product to achieve the desired content of spinel crystalline phase, improves the drop resistance and drop ball test height of the microcrystalline glass and microcrystalline glass product, and meanwhile prevents the deterioration of surface stress of the microcrystalline glass product. Therefore, $Al_2O_3$+ZnO is preferably 26-45%, $Al_2O_3$+ZnO is more preferably 30-42%, $Al_2O_3$+ZnO is further preferably 32-42%, $Al_2O_3$+ZnO is more further preferably 35-40%. In some implementations, $Al_2O_3$+ZnO is 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 35%, 35.5%, 36%, 36.5%, 37%, 37.5%, 38%, 38.5%, 39%, 39.5%, 40%, 40.5%, 41%, 41.5%, 42%, 42.5%, 43%, 43.5%, 44%, 44.5% or 45%.

In some implementations, the ratio of the content of $Al_2O_3$ to the content of ZnO, i.e., $Al_2O_3$/ZnO, is controlled within the range of 1.0-3.0, which is beneficial for improving the hardness of the microcrystalline glass and microcrystalline glass product, optimizing the Young's modulus, and preventing the decline in transmittance and the deterioration of haze of the microcrystalline glass and microcrystalline glass product. Therefore, $Al_2O_3$/ZnO is preferably 1.0-3.0, $Al_2O_3$/ZnO is more preferably 1.2-2.8, $Al_2O_3$/ZnO is further preferably 1.25-2.5, $Al_2O_3$/ZnO is more further preferably 1.5-2.3. In some implementations, $Al_2O_3$/ZnO is 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95 or 3.0.

$TiO_2$ is a nucleating agent for the microcrystalline glass and microcrystalline glass product provided by the present invention. If the content of $TiO_2$ is too high, it causes severe coloration (brownish yellow) of the microcrystalline glass and microcrystalline glass product, reducing the transmittance of the microcrystalline glass and microcrystalline glass product in the visible light region and increasing the haze and |B| value. Moreover, if the content of $TiO_2$ is too high, the glass tends to be milky during molding and crystallization, resulting in opacity. Therefore, the content of $TiO_2$ in the present invention is confined to 0.5-7%, preferably 1-6%, more preferably 2-5%. In some implementations, it can comprise about 0.5%, 1%, 1.5%, 2%, 2.5%, 3%, 3.5%, 4%, 4.5%, 5%, 5.5%, 6%, 6.5% or 7% of $TiO_2$.

In some implementations, the ratio of the content of $Li_2O$ to the content of $TiO_2$, i.e., $Li_2O/TiO_2$, is controlled within the range of 0.2-4.5, which can effectively reduce the coloration caused by $Ti^{3+}$ ions in the microcrystalline glass and microcrystalline glass product, improve the transmittance of the microcrystalline glass and microcrystalline glass product, and optimize the haze and |B| value of the microcrystalline glass and microcrystalline glass product. Therefore, $Li_2O/TiO_2$ is preferably 0.2-4.5, $Li_2O/TiO_2$ is more preferably 0.5-3.5, $Li_2O/TiO_2$ is further preferably0.7-2.5, $Li_2O/TiO_2$ is more further preferably 0.75-1.5. In some implementations, $Li_2O/TiO_2$ is 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4 or 4.5.

In some implementations, the ratio of the total content of $TiO_2$ and ZnO ($TiO_2$+ZnO) to the content of $Al_2O_3$, i.e., $(TiO_2$+ZnO)/$Al_2O_3$, is controlled within the range of 0.4-1.5, which can optimize the chemical strengthening performance of the microcrystalline glass, increase the depth of the ion exchange layer of the microcrystalline glass product, and improve the fracture toughness, four-point bending strength, and drop ball test height. Therefore, $(TiO_2$+ZnO)/$Al_2O_3$ is preferably 0.4-1.5, $(TiO_2$+ZnO)/$Al_2O_3$ is more preferably 0.5-1.2, $(TiO_2$+ZnO)/$Al_2O_3$ is further preferably 0.6-1.0, $(TiO_2$+ZnO)/$Al_2O_3$ is more further preferably 0.6-0.9. In some implementations, $(TiO_2$+ZnO)/$Al_2O_3$ is 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45 or 1.5.

$ZrO_2$ can serve as a nucleating agent for the microcrystalline glass and microcrystalline glass product. When used together with $TiO_2$, $ZrO_2$ can maximize the number of crystal nucleus in the microcrystalline glass. When there are many crystal nuclei, it is beneficial for stable crystal growth and uniform grain size. If the content of $ZrO_2$ is too high, the difficulty of melting the glass increases. Therefore, the content of $ZrO_2$ is 0-5%, preferably 0.5-4%, more preferably 1-3%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9% or 5% of $ZrO_2$.

$ZrO_2$ has low solubility in the glass system of the present invention. In some implementations, the solubility of $ZrO_2$ in the glass can be increased by including a certain amount of $P_2O_5$; however, excessive $P_2O_5$ is prone to phase separation during glass molding, leading to a decrease in the chemical stability of the microcrystalline glass and microcrystalline glass product. Therefore, the content of $P_2O_5$ in the present invention is confined to 0-5%, preferably 0.5-4%, more preferably 1-3%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9% or 5% of $P_2O_5$.

In some implementations, the ratio of the total content of $Al_2O_3$ and $Li_2O$ ($Al_2O_3+Li_2O$) to the content of $P_2O_5$, i.e., ($Al_2O_3+Li_2O$)/$P_2O_5$, is controlled within the range of 5.0-45.0, which is beneficial for improving the four-point bending strength and drop resistance of the microcrystalline glass and microcrystalline glass product, and improving the surface stress of the microcrystalline glass product. Therefore, ($Al_2O_3+Li_2O$)/$P_2O_5$ is preferably 5.0-45.0, ($Al_2O_3+Li_2O$)/$P_2O_5$ is more preferably 7.0-35.0, ($Al_2O_3+Li_2O$)/$P_2O_5$ is further preferably 8.0-30.0, ($Al_2O_3+Li_2O$)/$P_2O_5$ is more further preferably 10.0-25.0. In some implementations, ($Al_2O_3+Li_2O$)/$P_2O_5$ is 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 26.0, 27.0, 28.0, 29.0, 30.0, 31.0, 32.0, 33.0, 34.0, 35.0, 36.0, 37.0, 38.0, 39.0, 40.0, 41.0, 42.0, 43.0, 44.0 or 45.0.

In some implementations, the total content of $P_2O_5$ and $ZrO_2$, i.e., $P_2O_5+ZrO_2$, is controlled within the range of 0-8%, which is beneficial for obtaining uniform grains and small grain sizes in the microcrystalline glass and microcrystalline glass product, and optimizing the transmittance of the microcrystalline glass and microcrystalline glass product. Therefore, $P_2O_5+ZrO_2$ is preferably 0-8%, $P_2O_5+ZrO_2$ is more preferably 0.1-7%, $P_2O_5+ZrO_2$ is further preferably 0.5-5%. In some implementations, $P_2O_5+ZrO_2$ is 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, 6%, 6.1%, 6.2%, 6.3%, 6.4%, 6.5%, 6.6%, 6.7%, 6.8%, 6.9%, 7%, 7.1%, 7.2%, 7.3%, 7.4%, 7.5%, 7.6%, 7.7%, 7.8%, 7.9% or 8%.

In some implementations, the ratio of the content of $P_2O_5$ to the content of $ZrO_2$, i.e., $P_2O_5/ZrO_2$, is controlled within the range of 0.1-5.0, which is beneficial for improving the hardness and fracture toughness of the microcrystalline glass and microcrystalline glass product, and preventing the deterioration of the drop resistance and Young's modulus. Therefore, $P_2O_5/ZrO_2$ is preferably 0.1-5.0, $P_2O_5/ZrO_2$ is more preferably 0.2-3.0, $P_2O_5/ZrO_2$ is further preferably 0.5-2.0, $P_2O_5/ZrO_2$ is more further preferably 0.6-1.5. In some implementations, $P_2O_5/ZrO_2$ is 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9 or 5.0.

MgO helps to reduce the viscosity of the glass, inhibit the glass devitrification during molding, and refine grains during crystallization, and also has the effect of improving the low-temperature melting performance. In some implementations, MgO has the function of promoting the formation of quartz solid solution crystalline phases. If the content of MgO is too high, it tends to generate quartz solid solution phases with larger grains during glass crystallization, which will reduce the transmittance of the microcrystalline glass and microcrystalline glass product. Therefore, the content of MgO is 0.1-6%, preferably 1-5%, more preferably 2-4%. In some implementations, it can comprise about 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9% or 6% of MgO.

In some implementations, the ratio of the total content of $Li_2O$ and MgO ($Li_2O+MgO$) to the content of $TiO_2$, i.e., ($Li_2O+MgO$)/$TiO_2$, is controlled within the range of 0.3-8.0, which can refine grains, improve the transmittance and drop resistance of the microcrystalline glass and microcrystalline glass product, and optimize the haze and |B| value of the microcrystalline glass and microcrystalline glass product. Therefore, ($Li_2O+MgO$)/$TiO_2$ is preferably 0.3-8.0, ($Li_2O+MgO$)/$TiO_2$ is more preferably 0.5-5.0, ($Li_2O+MgO$)/$TiO_2$ is further preferably 1.0-3.0, ($Li_2O+MgO$)/$TiO_2$ is more further preferably 1.2-2.5. In some implementations, ($Li_2O+MgO$)/$TiO_2$ is 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9 or 8.0.

In some implementations, the ratio of the content of $Al_2O_3$ to the total content of MgO and $TiO_2$ ($MgO+TiO_2$), i.e., $Al_2O_3/(MgO+TiO_2)$, is controlled within the range of 1.3-10.0, which is beneficial for improving the hardness and drop ball test height of the microcrystalline glass and microcrystalline glass product, and optimizing the surface stress and haze of the microcrystalline glass product Therefore, $Al_2O_3/(MgO+TiO_2)$ is preferably 1.3-10.0, $Al_2O_3/(MgO+TiO_2)$ is more preferably 1.5-8.0, $Al_2O_3/(MgO+TiO_2)$ is further preferably 2.5-6.5, $Al_2O_3/(MgO+TiO_2)$ is more further preferably 3.0-5.5. In some implementations, $Al_2O_3/(MgO+TiO_2)$ is 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9 or 10.0.

$B_2O_3$ aids in the glass melting and improves the melting effect of the glass. If the content of $B_2O_3$ is too high, the chemical stability of the glass deteriorates, and boron anomaly easily occurs, causing boron-oxygen tetrahedron to transform into boron-oxygen triangular structure, thereby reducing the viscosity of the glass. In addition, boron volatilization can easily form streaks, leading to glass non-uniformity. Therefore, the content of $B_2O_3$ is 0-4%, preferably 0-2%, more preferably 0-1%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9% or 4% of $B_2O_3$.

$Na_2O$ can promote the glass melting and improve the chemical strengthening performance of the microcrystalline glass. However, in case of excessive $Na_2O$ in the present invention, it is easy to lead to many broken bonds in the glass, reducing the strength of the matrix glass, which affects the strength of the microcrystalline glass and microcrystalline glass product. Therefore, the upper limit of the content of $Na_2O$ in the present invention is 6%, preferably 4%, more preferably 2%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9% or 6% of $Na_2O$.

In some implementations, the ratio of the total content of $SiO_2$ and $Na_2O$ ($SiO_2+Na_2O$) to the content of ZnO, i.e., $(SiO_2+Na_2O)/ZnO$, is controlled within the range of 2.2-6.2, which can improve the fracture toughness and compressive strength of the microcrystalline glass and microcrystalline glass product while optimizing the |B| value. Therefore, $(SiO_2+Na_2O)/ZnO$ is preferably 2.2-6.2, $(SiO_2+Na_2O)/ZnO$ is more preferably 2.5-6.0, $(SiO_2+Na_2O)/ZnO$ is further preferably 2.8-5.5, $(SiO_2+Na_2O)/ZnO$ is more further preferably 3.0-5.0. In some implementations, $(SiO_2+Na_2O)/ZnO$ is 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1 or 6.2.

$K_2O$ helps to reduce the melting temperature of the glass, which is beneficial for chemical strengthening, and can increase the depth of the ion exchange layer of the microcrystalline glass product. However, excessive $K_2O$ tends to reduce the chemical stability of the glass and decrease the hardness. Therefore, the content of $K_2O$ is 3% or less, preferably 2% or less, more preferably 1% or less. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9% or 3% of $K_2O$.

In some implementations, the ratio of the total content of $Na_2O$ and $K_2O$ ($Na_2O+K_2O$) to the content of ZnO, i.e., $(Na_2O+K_2O)/ZnO$ is controlled to be 0.8 or less, which can refine grains, reduce the grain size of the microcrystalline glass and microcrystalline glass product, increase the transmittance and compressive strength of the microcrystalline glass and microcrystalline glass product, and optimize the haze of the microcrystalline glass and microcrystalline glass product. Therefore, $(Na_2O+K_2O)/ZnO$ is preferably 0.8 or less, $(Na_2O+K_2O)/ZnO$ is more preferably 0.6 or less, $(Na_2O+K_2O)/ZnO$ is further preferably 0.4 or less, $(Na_2O+K_2O)/ZnO$ is more further preferably 0.2 or less. In some implementations, $(Na_2O+K_2O)/ZnO$ is 0, greater than 0, 0.01, 0.02, 0.03, 0.04, 0.05, 0.06, 0.07, 0.08, 0.09, 0.1, 0.15, 0.2, 0.25, 0.3, 0.35, 0.4, 0.45, 0.5, 0.55, 0.6, 0.65, 0.7, 0.75 or 0.8.

CaO, BaO, and SrO serve as fluxing agents and do not participate in the formation of crystalline phase, they remain in the residual glass phase of the microcrystalline glass, helping to reduce the melting temperature and processing temperature. However, excessive content impairs the nucleation and crystallization during the conversion of matrix glass to microcrystalline glass, thereby negatively affecting the chemical stability of the microcrystalline glass. Therefore, the total content of CaO, BaO and SrO (CaO+BaO+SrO) is 0-5%, preferably 0-4%, more preferably 0-2%. In some implementations, CaO+BaO+SrO is 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9% or 5%.

$Y_2O_3$ can promote the melting of $ZrO_2$ and reduce the difficulty of glass melting. However, excessive content cause difficulties in forming crystals during glass crystallization, thereby decreasing the drop ball test height of the microcrystalline glass and microcrystalline glass product. Therefore, the upper limit of the content of $Y_2O_3$ is 6%, preferably 4%, more preferably 2%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9% or 6% of $Y_2O_3$.

In some implementations, the glass, microcrystalline glass, or microcrystalline glass product may also comprise 0-2% of clarifying agent to improve the de-foaming capability of the glass, microcrystalline glass, or microcrystalline glass product. Such clarifying agent includes, but is not limited to, one or more of $Sb_2O_3$, $SnO_2$, SnO, $CeO_2$, fluorine (F) compounds, chlorine (Cl) compounds, and bromine (Br) compounds, preferably $Sb_2O_3$. When the above clarifying agents exist alone or in combination, the upper limit of the content of the clarifying agent is preferably 2%, more preferably 1%, more further preferably 0.5%. In some implementations, the content of one or more clarifying agents is about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% or 2%.

In case that the performance of the glass, microcrystalline glass, or microcrystalline glass product provided by the present invention is not affected, other components not mentioned above may be appropriately added, such as $La_2O_3$, $Gd_2O_3$, $Yb_2O_3$, $Nb_2O_5$, $WO_3$, $Bi_2O_3$, $Ta_2O_5$, $TeO_2$, and the like. However, in order to maintain the excellent performance of the glass, microcrystalline glass, or microcrystalline glass product provided by the present invention, the individual or total content of $La_2O_3$, $Gd_2O_3$, $Yb_2O_3$, $Nb_2O_5$, $WO_3$, $Bi_2O_3$, $Ta_2O_5$, and $TeO_2$ is preferably 5% or less, more preferably 2% or less, further preferably 1% or less, and more further preferably 0%.

PbO and $As_2O_3$ are toxic substances, and even a small amount of PbO and $As_2O_3$ do not meet the environmental protection requirements. Therefore, the present invention preferably comprises 0% of PbO and/or $As_2O_3$ in some implementations.

In some implementations of the present invention, the matrix glass, microcrystalline glass or microcrystalline glass product with colors can be prepared by comprising colorant, so as to make the matrix glass, microcrystalline glass or microcrystalline glass product show different colors, and the colorant comprises: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_5$; and/or 0-4% of $CeO_2$. The weight percentage content and role of the colorant thereof are detailed as follows:

Brown or green matrix glass, microcrystalline glass or microcrystalline glass product prepared by the present invention use NiO, $Ni_2O_3$ or $Pr_2O_5$ as the colorant. NiO and $Ni_2O_3$, as the colorant, are used to prepare the brown or green matrix glass, microcrystalline glass or microcrystalline glass product. Such two components can be used alone or mixed, and their respective content is generally 4% or less, preferably 3% or less. If the content exceeds 4%, the colorant cannot be well dissolved in the matrix glass, microcrystalline glass or microcrystalline glass product. The lower limit of their respective content is 0.1% or more. If the content is less than 0.1%, the color of the matrix glass, microcrystalline glass or microcrystalline glass product is not obvious. In some implementations, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of NiO or $Ni_2O_3$. If mixed for use, the total content of NiO and $Ni_2O_3$ is generally 4% or less, and the lower limit of the total content is 0.1% or more. In some implementations, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of NiO and $Ni_2O_3$. $Pr_2O_5$ is used as the colorant of the green matrix glass, microcrystalline glass or microcrystalline glass product. If used alone, the content is generally 8% or less, preferably 6% or less, and the lower limit of $Pr_2O_5$ content is 0.4% or more. If it is less than 0.4%, the color of the matrix glass, microcrystalline glass or microcrystalline glass product is not obvious. In some implementations, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8% or 8.0% of $Pr_2O_5$.

Blue matrix glass, microcrystalline glass or microcrystalline glass product prepared by the present invention uses CoO or $Co_2O_3$ as the colorant. Such two colorant components can be used alone or mixed, and their respective content is generally 2% or less, preferably 1.8% or less. If the content exceeds 2%, the colorant cannot be well dissolved in the matrix glass, microcrystalline glass or microcrystalline glass product. The lower limit of their respective content is 0.05% or more. If the content is less than 0.05%, the color of the matrix glass, microcrystalline glass or microcrystalline glass product is not obvious. In some implementations, it can comprise about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9% or 2.0% of CoO or $Co_2O_3$. If mixed for use, the total content of CoO and $Co_2O_3$ is no more than 2%, and the lower limit of the total content is 0.05% or more. In some implementations, it can comprise about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9% or 2.0% of CoO and $Co_2O_3$.

Yellow matrix glass, microcrystalline glass or microcrystalline glass product prepared by the present invention uses $Cu_2O$ or $CeO_2$ as the colorant. Such two colorant components can be used alone or mixed, and the lower limit of their respective content is 0.5% or more. If the content is less than 0.5%, the color of the matrix glass, microcrystalline glass or microcrystalline glass product is not obvious. If used alone, $Cu_2O$ is 4% or less, preferably 3% or less. If the content exceeds 4%, the matrix glass is prone to devitrification. In some implementations, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of $Cu_2O$. If used alone, the content of $CeO_2$ is generally 4% or less, preferably 3% or less. If the content exceeds 4%, gloss of the matrix glass, microcrystalline glass or microcrystalline glass product is not good. In some implementations, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of $CeO_2$. Meanwhile, adding a small amount of $CeO_2$ into the glass has the effect of defoaming. $CeO_2$ in the glass can also be used as the clarifying agent. When it is used as the clarifying agent, the content of $CeO_2$ is 2% or less, preferably 1% or less, more preferably 0.5% or less. If two colorants are mixed for use, the total content thereof is generally 4% or less, and the lower limit of the total content is 0.5% or more. In some implementations, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of $CeO_2$ and $Cu_2O$.

Black or smoky gray matrix glass, microcrystalline glass or microcrystalline glass product prepared by the present invention uses $Fe_2O_3$ alone as the colorant; or uses a mixture of $Fe_2O_3$ and CoO as the colorant; or uses a mixture of $Fe_2O_3$ and $Co_2O_3$ as the colorant; or uses a mixture of $Fe_2O_3$, CoO and NiO as the colorant; or uses a mixture of $Fe_2O_3$, $Co_2O_3$, and NiO as the colorant. The colorant used to prepare black and smoky gray matrix glass, microcrystalline glass or microcrystalline glass product mainly uses $Fe_2O_3$, and the content is 7% or less, preferably 5% or less. The lower limit of the content of $Fe_2O_3$ is 0.2% or more. In some implementations, it can comprise about 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.5%, 5.0%, 5.5%, 6.0%, 6.5% or 7.0% of $Fe_2O_3$. CoO and $Co_2O_3$ have absorption in visible light, which can deepen the coloring degree of the matrix glass, microcrystalline glass or microcrystalline glass product. In general, the respective content is 0.6% or less when mixed with $Fe_2O_3$ for use, and the lower limit is 0.2% or more. In some implementations, it can comprise about 0.2%, 0.3%, 0.4%, 0.5% or 0.6% of CoO and/or $Co_2O_3$. NiO has absorption in visible light, which can deepen the coloring degree of the matrix glass, microcrystalline glass or microcrystalline glass product. In general, the content of NiO is 1 % or less when mixed for use, and the lower limit of the total content is 0.2% or more. In some implementations, it can comprise about 0.2%, 0.3%, 0.4%, 0.5%, 0.6%, 0.7%, 0.8%, 0.9% or 1.0% of NiO.

Purple matrix glass, microcrystalline glass or microcrystalline glass product prepared by the present invention uses $MnO_2$ as the colorant, and the use content is generally 4% or less, preferably 3% or less. The lower limit of $MnO_2$ content is 0.1% or more. If it is less than 0.1%, the color of the matrix glass, microcrystalline glass or microcrystalline glass product is not obvious. In some implementations, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% or 4.0% of $MnO_2$.

Pink matrix glass, microcrystalline glass or microcrystalline glass product prepared by the present invention uses $Fr_2O_3$ as the colorant, and the use content is generally 8% or less, preferably 6% or less. Due to low coloring efficiency of rare earth element $Fr_2O_3$, when the use content exceeds 8%, it cannot further deepen the color of the matrix glass, microcrystalline glass or microcrystalline glass product, but increase the cost. The lower limit of $Fr_2O_3$ content is 0.4% or more. If it is less than 0.4%, the color of the matrix glass, microcrystalline glass or microcrystalline glass product is not obvious. In some implementations, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8% or 8.0% of $Er_2O_3$.

Purplish red matrix glass, microcrystalline glass or microcrystalline glass product prepared by the present invention uses $Nd_2O_3$ as the colorant, and the use content is generally 8% or less, preferably 6% or less. Due to low coloring efficiency of rare earth element $Nd_2O_3$, when the use content exceeds 8%, it cannot further deepen the color of the matrix glass, microcrystalline glass or microcrystalline glass product, but increase the cost. The lower limit of $Nd_2O_3$ content is 0.4% or more. If it is less than 0.4%, the color of the matrix glass, microcrystalline glass or microcrystalline glass product is not obvious. In some implementations, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8% or 8.0% of $Nd_2O_3$.

Red matrix glass, microcrystalline glass or microcrystalline glass product prepared by the present invention uses a mixture of $Er_2O_3$, $Nd_2O_3$ and $MnO_2$ as the colorant. In the glass, Er ion has absorption at 400-500nm, Mn ion mainly has absorption at 500nm, and Nd ion mainly has strong absorption at 580nm, and the mixture of such three substances can prepare red matrix glass, microcrystalline glass or microcrystalline glass product. Since $Er_2O_3$ and $Nd_2O_3$ belong to rare earth coloring, the coloring capability is relatively weak. The usage amount of $Er_2O_3$ is within 6%, the usage amount of $Nd_2O_3$ is within 4%, and the usage amount of $MnO_2$ with strong coloring capability is within a range of 2%. The lower limit of the total mixed colorant content is 0.9% or more.

The terms "not contained" and "0%" as used herein mean that the compound, molecule or element and the like are not intentionally added to the matrix glass, microcrystalline glass or microcrystalline glass product provided by the present invention as raw materials; however, as raw materials and/or equipment for the production of matrix glass, microcrystalline glass or microcrystalline glass product, there will be some impurities or components that are not intentionally added in small or trace amounts in the final matrix glass, microcrystalline glass or microcrystalline glass product, and this situation also falls within the protection scope of the present invention patent.

In some implementations of the present invention, the microcrystalline glass and microcrystalline glass products comprise spinel crystalline phase, which provides high strength for the microcrystalline glass and microcrystalline glass product provided by the present invention, increases the fracture toughness of the microcrystalline glass and microcrystalline glass product, and enhances the body falling ball height of the microcrystalline glass and the drop ball test height as well as the four-point bending strength of the microcrystalline glass product. The microcrystalline glass provided by the present invention has excellent chemical strengthening performance, and can be subject to chemical strengthening process treatment in order to obtain excellent mechanical strength. Through rational component design, the microcrystalline glass and microcrystalline glass product provided by the present invention can obtain appropriate grain size, so that the microcrystalline glass and microcrystalline glass product provided by the present invention have high strength.

The grain size and crystalline phase type in the microcrystalline glass or microcrystalline glass product provided by the present invention will affect the haze and light transmittance of the microcrystalline glass or microcrystalline glass product. The smaller the grain size, the higher the light transmittance; the smaller the haze, and the higher the light transmittance. In some implementations, the haze of the microcrystalline glass product or microcrystalline glass with a thickness of 1mm or less is 0.3% or less, preferably 0.25% or less, more preferably 0.05-0.2%. In some implementations, the grain size of the microcrystalline glass product or microcrystalline glass is 60nm or less, preferably 45nm or less, more preferably 10-30nm.

In some implementations, the content of crystalline phase and refractive index in the microcrystalline glass or microcrystalline glass product provided by the present invention affects the |B| value in the microcrystalline glass or microcrystalline glass product. Bluish or yellowish color is observed in the microcrystalline glass or microcrystalline glass product in the visible light range, which affects the optical performance of the product, and it is marked with |B| value in LAB (chromaticity value of substance color). The microcrystalline glass or microcrystalline glass product provided by the present invention exhibit low |B| values in the visible light range. In some implementations, the average light |B| value at 400-800nm of the microcrystalline glass product or microcrystalline glass with a thickness of 1mm or less is 1.0 or less, preferably 0.8 or less, more preferably 0.3-0.6.

In some implementations, the microcrystalline glass or microcrystalline glass product provided by the present invention shows high transparency in the visible light range (that is, the microcrystalline glass or microcrystalline glass product is transparent). The microcrystalline glass or microcrystalline glass product shows high transmittance in the visible light range. In some implementations, the average light transmittance at 400-800nm of the microcrystalline glass product or microcrystalline glass with a thickness of 1mm or less is preferably 87.0% or more, more preferably 88.5% or more, further preferably 89.5% or more. In some preferred implementations, the light transmittance at 550nm of the microcrystalline glass product or microcrystalline glass with a thickness of 1mm or less is preferably 87.0% or more, more preferably 88.0% or more, further preferably 89.0% or more.

In some implementations, antimicrobial component can be added into the matrix glass, microcrystalline glass or microcrystalline glass product. The microcrystalline glass or microcrystalline glass product mentioned herein can be used in applications such as kitchen or catering countertops, where there is a high risk of exposure to harmful bacteria. The antimicrobial component contained in the matrix glass, microcrystalline glass or microcrystalline glass product includes, but is not limited to, Ag, AgO, Cu, CuO, and $Cu_2O$. In some implementations, the content of the above-mentioned antimicrobial component alone or in combination is 2% or less, preferably 1% or less.

The matrix glass, microcrystalline glass and microcrystalline glass product provided by the present invention can be produced and manufactured by the following methods:
Formation of the matrix glass: Raw materials (oxides, hydroxides, mixed salts, and the like) are uniformly mixed according to the component proportion, and then placed into a crucible (e.g., a platinum or quartz crucible). Depending on the melting difficulty of the glass composition, melting is carried out in an electric furnace or gas furnace within a temperature range of 1350-1550°C for 5-24 hours, preferably at 1450-1550°C. The matrix glass is then obtained after clarification, homogenization, molding, and annealing. The clarification temperature is preferably greater than 1550°C but less than or equal to 1650°C, and the annealing temperature is preferably 450-600°C.

The matrix glass provided by the present invention can be formed by a well-known method.

The matrix glass provided by the present invention is subject to crystallization treatment through crystallization process after molding or molding processing, and crystals are uniformly precipitated inside the glass to prepare the microcrystalline glass. The crystallization treatment can be carried out through one stage or two stages, preferably two stages. The two-stage crystallization treatment involves nucleation process treatment under the first temperature, followed by crystal growth process treatment under the second temperature. The crystallization treatment under the first temperature is called first crystallization treatment, and the crystallization treatment under the second temperature is called second crystallization treatment.

In order to make the microcrystalline glass achieve the desired physico-chemical performance, the crystallization process is preferably as follows:
When the above crystallization treatment is made through one stage, the nucleation process and crystal growth process can be carried out continuously. That is, heating up to a specified crystallization treatment temperature, holding the temperature for a certain time after reaching the crystallization treatment temperature, and then performing cooling. The crystallization treatment temperature is preferably 600-800°C. In order to precipitate the desired crystalline phase, the crystallization treatment temperature is more preferably 650-750°C. The holding time under the crystallization treatment temperature is preferably 1-10 hours, more preferably 3-6 hours.

For the two-stage crystallization treatment, the first temperature is preferably 600-700°C, and the second temperature is preferably greater than 700°C but less than or equal to 800°C. The holding time under the first temperature is preferably 1-6 hours, and the holding time under the second temperature is preferably 2-5 hours.

In some implementations, the matrix glass or microcrystalline glass mentioned herein can be made into a former by a variety of processes, the former includes but is not limited to sheet, and the processes include but are not limited to slit drawing, floating, rolling and other sheet forming processes known in the art. Or the matrix glass or microcrystalline glass can be formed by floating or rolling method known in the art. The former mentioned in the present invention further comprises lens, prism, etc.

For the matrix glass or microcrystalline glass provided by the present invention, methods such as grinding or polishing can be adopted to manufacture sheet-type glass former or microcrystalline glass former, but the method of manufacturing the glass former or microcrystalline glass former is not limited to these methods.

For the matrix glass or microcrystalline glass provided by the present invention, methods such as hot bending or pressing process can be adopted at a certain temperature to manufacture various shapes of glass former or microcrystalline glass former, but are not limited to these methods.

In some implementations, hot bending process can be adopted to make the glass former or microcrystalline glass former. Said hot bending process refers to placing 2D or 2.5D glass or microcrystalline glass in a mould, performing heating and warm-up, pressing, pressure holding and cooling successively in a hot bending machine, in order to make a 3D curved glass former or microcrystalline glass former.

In some implementations, the microcrystalline glass former has a 2.5D or 3D structure, that is, the microcrystalline glass former has a non-planar structure. "Non-planar structure" herein refers to that in a 2.5D or 3D shape, at least a portion of the microcrystalline glass former extends outward or along an angle to a plane defined by original and layout configuration of the 2D matrix glass. The 2.5D or 3D microcrystalline glass former formed by the matrix glass may have one or more raised or curved parts.

In some implementations, combined with the characteristics such as growth of crystalline phase, transformation of crystalline phase in the microcrystalline glass, the manufacturing method of the microcrystalline glass former is a hot bending process method. To be specific, said method comprises precrystallization and thermal processing. The precrystallization mentioned in the present invention is to form the matrix glass into precrystallized glass by controlling the crystallization process, and the crystallinity of said precrystallized glass fails to reach the crystallinity required by the performance index of the target microcrystalline glass former. Then, the precrystallized glass is formed into the microcrystalline glass former by thermal processing.

In some implementations, the manufacturing method of the microcrystalline glass former comprises the following steps:

1) performing a crystallization heat treatment process once for the matrix glass, comprising heating, heat preservation and nucleation, heating, heat preservation and crystallization, cooling to room temperature, and forming a precrystallized glass;
2) and thermally processing the precrystallized glass to obtain the microcrystalline glass former.

The crystallization heat treatment process mentioned in the present invention comprises nucleating the matrix glass at a certain temperature $T_h$ and time $t_h$, and then performing crystallization at a certain temperature $T_c$ and time $t_c$, wherein the crystallinity of the obtained precrystallized glass fails to reach the crystallinity required by the performance index of the target microcrystalline glass former. The total content of principal crystalline phase ($I_{c1}$) in the crystallinity of the precrystallized glass is calculated by applying XRD test data and Rietveld full-spectrum fitting refinement method. Precrystallization according to the present invention is a complete process from the perspective of process, comprising one step of nucleation process, crystallization process of one stage, two stages or three stages and above. It is a complete process from heating, heat preservation, and heating again to heat preservation...and then cooling to room temperature according to the process. Different from the primary crystallization and secondary crystallization... mentioned in some literatures or patents, the present invention is actually only the first-stage crystallization, the second-stage crystallization... in a complete crystallization process. The intermediate process is continuous, and there is no other heating and crystallization process after falling to room temperature.

The thermal processing mentioned in the present invention refers to thermal processing treatment of said precrystallized glass under certain conditions such as temperature, time, and pressure. Said thermal processing comprises more than one thermal processing, and said thermal processing includes but is not limited to pressing, bending or drawing the precrystallized glass under certain conditions such as temperature, time, and pressure. In the process of thermal processing, sometimes the former with complex shape cannot be completed by one thermal processing, and more than twice of thermal processing may be required.

In some implementations, the manufacturing method of the microcrystalline glass former belongs to hot bending process. To be specific, in some implementations, the manufacturing method of the microcrystalline glass former comprises the following steps:

1) Heating and warm-up: placing the matrix glass or precrystallized glass or microcrystalline glass into a mould, and making the mould pass through each heating site in a hot bending machine successively and stay at each site for a certain time for heat preservation. The temperature of warm-up zone is 400-800°C, pressure is 0.01-0.05MPa, and time is 40-200s. In some implementations, for the hot bending machine of 5 warm-up sites, the initial temperature rise is generally set steadily at about 500°C, the subsequent sites gradually increase the temperature, the temperature gradient between two adjacent sites gradually narrows from low temperature to high temperature, and temperature difference between the last warm-up site and the first pressing site is within a range of 20°C.

2) Pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s. The pressure is determined according to the factors such as glass thickness and radian.

3) Pressure holding and cooling: transferring the mould to a cooling site to cool down site by site. The cooling temperature range is controlled to be 750-500°C, the pressure is 0.01-0.05Mpa, and the time is 40-200s.

The microcrystalline glass former adopts hot bending process. In addition to controlling the appearance quality of ordinary high-alumina glass, it is also necessary to control the influence of crystal growth and development on the performance of microcrystalline glass during hot bending. For example, for 3D curved microcrystalline glass used for the housing of display devices or electronic devices, close attention should be paid to the light transmittance after hot bending, haze, |B| value, and uniformity.

The matrix glass, microcrystalline glass and microcrystalline glass product mentioned in the present invention may have any thickness that is reasonably useful.

The microcrystalline glass provided by the present invention can not only improve the mechanical characteristics through crystal precipitation, but also obtain better mechanical performance by forming a compressive stress layer, so as to make the microcrystalline glass product.

In some implementations, the matrix glass or microcrystalline glass can be processed into sheets, and/or molded (e.g. hole punching, hot bending, etc.), polished and/or swept after setting, and then chemically strengthened by a chemical strengthening process.

The chemical strengthening mentioned in the present invention is ion exchange method. In the process of ion exchange, smaller metal ions in the matrix glass or microcrystalline glass are substituted or "exchanged" by larger metal ions with the same valence state near the matrix glass or microcrystalline glass. The substitution of smaller ions with larger ions can construct the compressive stress in the matrix glass or microcrystalline glass, so as to form the compressive stress layer.

In some implementations, metal ions belong to monovalent alkali metal ions (such as $Na^+$, $K^+$, $Rb^+$ and $Cs^+$), and the ion exchange is carried out by immersing the matrix glass or microcrystalline glass in the salt bath of at least one molten salt containing larger metal ions. These larger metal ions are used to substitute the smaller metal ions in the matrix glass. Or other monovalent metal ions, such as $Ag^+$, $Tl^+$ and $Cu^+$, can also be used to exchange monovalent ions. One or more ion exchange processes for chemical strengthening of matrix glass or microcrystalline glass may include but are not limited to: immersing in a single salt bath, or immersing in a plurality of salt baths with the same or different composition, and conducting washing and/or annealing between the immersions.

In some implementations, the matrix glass or microcrystalline glass can have ion exchange by immersing in the salt bath of molten Na salt (e.g. $NaNO_3$) at the temperature of about 350°C-470°C for about 1-36 hours. The temperature range is preferably 400°C-460°C, and the time range is preferably 2-15 hours. In this implementation, Na ion substitutes some Li ions in the matrix glass or microcrystalline glass, so as to form the surface compression layer and show high mechanical performance. In some implementations, the matrix glass or microcrystalline glass can have ion exchange by immersing in the salt bath of molten K salt and Na salt at the temperature of about 360°C-450°C for 1-36 hours, and the time range is preferably 2-24 hours.

The microcrystalline glass involved in the present invention exhibits highly efficient low-temperature ion exchange performance. In some implementations, the depth of the Na ion exchange layer can reach $75\mu m$ or more at low ion-exchange temperature and within short exchange time. After ion exchange, the hardness of the microcrystalline glass product is significantly increased. The main reason is that ion exchange forms high compressive stress on the surface of the microcrystalline glass product through the "crowding effect", which enhances the resistance to deformation of the microcrystalline glass product, thereby increasing the hardness. In some implementations, after chemical strengthening of the microcrystalline glass provided by the present invention, Vickers hardness of the obtained microcrystalline glass product can achieve 650kgf/mm$^2$ or more.

The following methods are adopted to test the performance indexes of the microcrystalline glass and/or microcrystalline glass product provided by the present invention:

[Haze]

Use haze tester Minolta CM3600A, prepare samples 1mm or less, and test according to GB2410-80 standard.

[Grain size]

It is measured by SEM (scanning electron microscope). The grain size is determined by performing surface treatment of microcrystalline glass in HF acid, spraying gold on the surface of microcrystalline glass, and then scanning the surface under SEM (scanning electron microscope).

[Light transmittance]

The light transmittance mentioned herein is external transmittance, sometimes referred to as transmittance.
The average light transmittance at 400-800nm is measured by processing the sample to be 1mm or less and polishing in parallel with the opposite plane, and using Hitachi U-41000 spectrophotometer.
The light transmittance at 550nm is measured by processing the sample to be 1mm or less and polishing in parallel with the opposite plane, and using Hitachi U-41000 spectrophotometer.

[Depth of ion exchange layer]

Use glass surface stress gauge SLP-2000 to measure the depth of ion exchange layer.
The calculation is made based on the refractive index of 1.56 and optical elastic constant of 29[(nm/cm)/Mpa] of the sample.

[Surface stress]

Use glass surface stress meter SLP-2000 to measure the surface stress.
The calculation is made based on the refractive index of 1.56 and optical elastic constant of 29[(nm/cm)/Mpa] of the sample.

[Drop resistance]

Use directional drop tester WH-2101 to test the drop resistance. Freely fall from a specified height after loading the same specification of glass products onto a 2D microcrystalline glass product (each piece weighs 20g, with 2 pieces of loads) and laying 60-80 mesh sandpaper on a base, and hit the sample directly onto the sandpaper. The drop resistance refers to the height where no fracture occurs and the impact can be withstood. To be specific, the test starts from a height of 600mm, and the height is changed successively by 700mm, 800mm, 900mm, 1000mm and above in case of no fracture. For the embodiments with "drop resistance", the microcrystalline glass product is taken as the test object. The test data recorded as 1000mm in the embodiment means that even when the microcrystalline glass product with load drops from the height of 1000mm, no fracture occurs and the impact can be withstood. The maximum experimental height of the drop tester WH-2101 is 2000mm.

[Drop ball test height]

A microcrystalline glass product sample of 145mm × 67mm × 0.7mm is placed onto a glass bearing fixture, and a 132g steel ball is dropped from the specified height onto the center point of the sample. The maximum drop ball test height refers to the maximum height at which the sample can withstand the impact without breaking. Specifically, the drop ball test starts at a height of 400mm, with one drop per height. If the sample does not break, the height is increased by 100mm at a time for subsequent tests until the sample breaks. For the embodiments with "drop ball test height", the microcrystalline glass product is taken as the test object. The test data recorded as 1700mm in the embodiment means that even when the steel ball drops from the height of 1700mm, the microcrystalline glass product has no fracture and the impact is withstood. The drop ball test height in the present invention is sometimes referred to as drop ball height.

[Fracture toughness]

Directly measure the indentation expansion crack size. The specimen specification is 2mm×4mm×20mm. After the specimen is prepared by chamfering, grinding and polishing, apply a 49N force onto the specimen with a Vickers hardness indenter and maintain it for 30s until indentation appears, and then measure the fracture strength by a three-point bending method.

[Four-point bending strength]

Use microcomputer-controlled electronic universal testing machine CMT6502 to test the sample with thickness of 1mm or less (preferably 0.7mm) in accordance with ASTM C 158-2002. Four-point bending strength is sometimes referred to as bending strength in the present invention.

[Vickers hardness]

It is expressed by the load (N) when a diamond quadrangular indenter with an opposite plane angle of 136° is pressed into a pyramid-shaped depression on the test surface divided by the surface area (mm$^2$) calculated by the length of the depression. The test load is 100(N), and the holding time is 15 (seconds). Vickers hardness is sometimes referred to as hardness in the present invention.

[Compressive Strength]

A microcomputer-controlled electronic universal testing machine CMT6502 is used, and a 145mm × 67mm × 0.7mm microcrystalline glass product sample is placed on the glass bearing fixture. The pressing rod has a mushroom-shaped head with a diameter of $\not C$ 10mm, and the pressing speed is 5mm/min until the sample is damaged. Before testing, the fixture needs to be calibrated, and the testing point is located at the center. The test button is clicked until the microcrystalline glass product sample breaks under compression, and the pressure (N) at the time of sample breakage is recorded. For embodiments with "compressive strength", the microcrystalline glass product is used as the test object. In the embodiments, the test value record of 500N indicates that the microcrystalline glass product can withstand a maximum compressive force of 500N before breaking.

[|B| value]

Use Minolta CM-700d to test the B value. The thickness of the sample is 1mm or less. Use supporting long calibration tube and short calibration tube to calibrate the instrument zero and whiteboard respectively, then perform an air test with the long tube, and judge the stability and reliability of instrument calibration (B≤0.05). After the instrument calibration is qualified, place a product on the zero-position long tube for testing.
|B| value is the absolute value of B.

[Young's modulus]

The Young's modulus (E) is tested by ultrasonic wave for P-wave velocity and S-wave velocity, and then calculated according to the following formula.

$$E = \frac{4G^2 - 3GV_T^{\,2}\rho}{G - V_T^{\,2}\rho}$$

$$G = V_S^2\rho$$

Wherein:

E refers to Young's modulus, Pa;
G refers to shear modulus, Pa;
$V_T$ refers to S-wave velocity, m/s;
Vs refers to P-wave velocity, m/s;
$\rho$ refers to glass density, g/cm$^3$;

The microcrystalline glass product provided by the present invention has the properties as below:

1) In some implementations, the grain size of the microcrystalline glass product is 60nm or less, preferably 45nm or less, more preferably 10-30nm.

2) In some implementations, the depth of the ion exchange layer of the microcrystalline glass product is 75μm or more, preferably 80-150μm, more preferably 100-125μm.

3) In some implementations, the surface stress of the microcrystalline glass product is 200MPa or more, preferably 250-400MPa, more preferably 300-400MPa.

4) In some implementations, the drop ball test height of the microcrystalline glass product is 1000mm or more, preferably 1200mm or more, more preferably 1500mm or more.

5) In some implementations, the drop resistance of the microcrystalline glass product is 1200mm or more, preferably 1300mm or more, more preferably 1400mm or more.

6) In some implementations, the fracture toughness of the microcrystalline glass product is $1.0 \text{MPa} \cdot \text{m}^{1/2}$ or more, preferably $1.2 \text{MPa} \cdot \text{m}^{1/2}$ or more, more preferably $1.2\text{-}1.6 \text{MPa} \cdot \text{m}^{1/2}$.

7) In some implementations, the four-point bending strength of the microcrystalline glass product is 500MPa or more, preferably 600MPa or more, more preferably 700-1000MPa.

8) In some implementations, the compressive strength of the microcrystalline glass product is 400N or more, preferably 400-550N, and more preferably 450-550N.

9) In some implementations, the Vickers hardness ($H_v$) of the microcrystalline glass product is $650 \text{kgf/mm}^2$ or more, preferably $660 \text{kgf/mm}^2$ or more, more preferably $680\text{-}750 \text{kgf/mm}^2$.

10) In some implementations, the haze of the microcrystalline glass product with a thickness of 1mm or less is 0.3% or less, preferably 0.25% or less, more preferably 0.05-0.2%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

11) In some implementations, the average light transmittance at 400-800nm wavelength of the microcrystalline glass product with a thickness of 1mm or less is 87.0% or more, preferably 88.5% or more, more preferably 89.5% or more. This thickness is preferably 0.2-1mm, more preferably 0.3-0.9mm, further preferably 0.5-0.8mm, more further preferably 0.55mm or 0.6mm or 0.68mm or 0.7mm or 0.75mm.

12) In some implementations, the light transmittance at 550nm wavelength of the microcrystalline glass product with a thickness of 1mm or less is 87.0% or more, preferably 88.0% or more, more preferably 89.0% or more. This thickness is preferably 0.2-1mm, more preferably 0.3-0.9mm, further preferably 0.5-0.8mm, more further preferably 0.55mm or 0.6mm or 0.68mm or 0.7mm or 0.75mm.

13) In some implementations, the average light |B| value at 400-800nm of the microcrystalline glass product with a thickness of 1mm or less is 1.0 or less, preferably 0.8 or less, more preferably 0.3-0.6. The thickness is preferably 0.2-1mm, more preferably 0.3-0.9mm, further preferably 0.5-0.8mm, more further preferably 0.55mm or 0.6mm or 0.68mm or 0.7mm or 0.75mm.

The microcrystalline glass provided by the present invention has the properties as below:

1) In some implementations, the grain size of the microcrystalline glass is 60nm or less, preferably 45nm or less, more preferably 10-30nm.

2) In some implementations, the haze of the microcrystalline glass with a thickness of 1mm or less is 0.3% or less, preferably 0.25% or less, more preferably 0.05-0.2%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

3) In some implementations, the average light transmittance at 400-800nm wavelength of the microcrystalline glass with a thickness of 1mm or less is 87.0% or more, preferably 88.5% or more, more preferably 89.5% or more. This thickness is preferably 0.2-1mm, more preferably 0.3-0.9mm, further preferably 0.5-0.8mm, more further preferably 0.55mm or 0.6mm or 0.68mm or 0.7mm or 0.75mm.

4) In some implementations, the light transmittance at 550nm wavelength of the microcrystalline glass with a thickness of 1mm or less is 87.0% or more, preferably 88.0% or more, more preferably 89.0% or more. This thickness is preferably 0.2-1mm, more preferably 0.3-0.9mm, further preferably 0.5-0.8mm, more further preferably 0.55mm or 0.6mm or 0.68mm or 0.7mm or 0.75mm.

5) In some implementations, the average light |B| value at 400-800nm of the microcrystalline glass with a thickness of 1mm or less is 1.0 or less, preferably 0.8 or less, more preferably 0.3-0.6. The thickness is preferably 0.2-1mm, more preferably 0.3-0.9mm, further preferably 0.5-0.8mm, more further preferably 0.55mm or 0.6mm or 0.68mm or 0.7mm or 0.75mm.

6) In some implementations, the Young's modulus (E) of the microcrystalline glass is 80-110GPa, preferably 85-105GPa, more preferably 90-105GPa.

7) In some implementations, the Vickers hardness ($H_v$) of the microcrystalline glass is $550 \text{kgf/mm}^2$ or more, preferably $580 \text{kgf/mm}^2$ or more, more preferably $600\text{-}650 \text{kgf/mm}^2$.

Due to the above-mentioned excellent performance, the microcrystalline glass, microcrystalline glass product, matrix glass, glass former, and microcrystalline glass former provided by the present invention can be widely made into glass cover plates or glass components; meanwhile, the microcrystalline glass, microcrystalline glass product, matrix glass, glass former, and microcrystalline glass former provided by the present invention can be applied in electronic devices or display devices, such as mobile phone, watch, computer, and touch screen, and can be used to manufacture protective glass for mobile phone, smart phone, tablet, laptop, PDA, television, personal computer, MTA machine or industrial display, or can be used to manufacture touch screen, protective window, car window, train window, aviation mechanical window, and protective glass of touch screen, or can be used to manufacture hard disk substrate or solar cell substrate, or can be used to manufacture white household appliances, such as refrigerator parts or kitchenware.

Embodiment

The following non-limiting embodiments are provided in order to further clearly explain and illustrate the technical solution of the present invention. Many efforts have been made to ensure the accuracy of numerical values (e.g., quantity, temperature) in the embodiments of the present invention, but some errors and deviations must be considered. The composition itself is given as wt% based on oxide and has been standardized to 100%.

<Microcrystalline glass embodiment>

This embodiment obtains the microcrystalline glass with composition shown in Tables 1-4 by the above manufacturing method of microcrystalline glass. In addition, the characteristics of each microcrystalline glass are measured by the test method mentioned in the present invention, and the measurement results are shown in Tables 1 to 4. The following embodiments show haze, average light transmittance at 400-800nm wavelength, light transmittance at 550nm wavelength, and average light |B| value at 400-800nm, and the thickness of the test sample is 0.7mm.

Table 1.

| Embodiment | 1# | 2# | 3# | 4# | 5# | 6# |
|---|---|---|---|---|---|---|
| $SiO_2$ | 48 | 46 | 49 | 46 | 48 | 54 |
| $Al_2O_3$ | 23 | 27 | 18 | 23 | 19 | 22 |
| $ZnO$ | 15 | 11 | 12 | 18 | 11 | 10 |
| $Li_2O$ | 3 | 5 | 5 | 2 | 2 | 2 |
| $TiO_2$ | 4 | 4 | 4 | 4 | 2 | 2 |
| $MgO$ | 2 | 2 | 6 | 1 | 3 | 2 |
| $ZrO_2$ | 1.5 | 1.5 | 2 | 2 | 4 | 2 |
| $P_2O_5$ | 2 | 2 | 2 | 2 | 2.5 | 2 |
| $K_2O$ | 0 | 0 | 1 | 0 | 0 | 0 |
| $Na_2O$ | 1 | 0 | 0 | 1 | 1 | 1 |
| $CaO+BaO+SrO$ | 0 | 1 | 0 | 0 | 2 | 2 |
| $Y_2O_3$ | 0 | 0 | 0 | 0 | 5 | 0 |
| $B_2O_3$ | 0 | 0 | 0 | 0 | 0 | 0 |
| $Sb_2O_3$ | 0.50 | 0.5 | 1 | 1 | 0.5 | 1 |
| total | 100 | 100 | 100 | 100 | 100 | 100 |
| $SiO_2/Al_2O_3$ | 2.09 | 1.7 | 2.72 | 2 | 2.53 | 2.45 |
| $Al_2O_3+ZnO$ | 38 | 38 | 30 | 41 | 30 | 32 |
| $Al_2O_3/ZnO$ | 1.53 | 2.45 | 1.5 | 1.28 | 1.73 | 2.2 |
| $Li_2O/TiO_2$ | 0.75 | 1.25 | 1.25 | 0.5 | 1 | 1 |
| $P_2O_5/ZrO_2$ | 1.33 | 1.33 | 1 | 1 | 0.63 | 1 |
| $(TiO_2+ZnO)/Al_2O_3$ | 0.83 | 0.56 | 0.89 | 0.96 | 0.68 | 0.55 |
| $(Al_2O_3+Li_2O)/P_2O_5$ | 13 | 16 | 11.5 | 12.5 | 8.4 | 12 |

(continued)

| Embodiment | 1# | 2# | 3# | 4# | 5# | 6# |
|---|---|---|---|---|---|---|
| $(Li_2O+MgO)/TiO_2$ | 1.25 | 1.75 | 2.75 | 0.75 | 2.5 | 2 |
| $(K_2O+Na_2O)/ZnO$ | 0.07 | 0 | 0.08 | 0.06 | 0.09 | 0.1 |
| $(SiO_2+Na_2O)/ZnO$ | 3.27 | 4.18 | 4.08 | 2.61 | 4.45 | 5.5 |
| $Al_2O_3/(MgO+TiO_2)$ | 3.83 | 4.5 | 1.8 | 4.6 | 3.8 | 5.5 |
| $P_2O_5+ZrO_2$ | 3.5 | 3.5 | 4 | 4 | 6.5 | 4 |
| Content of crystalline phase (%) | 41.1 | 35.2 | 33.1 | 44.1 | 28 | 31.5 |
| Type of crystalline phase | $ZnAl_2O_4$ | $ZnAl_2O_4$ | Quartz solid solution, $ZnAl_2O_4$ | $ZnAl_2O_4$ | Quartz solid solution, $ZnAl_2O_4$ | $ZnAl_2O_4$ |
| Grain size (nm) | 20 | 21 | 34 | 15 | 39 | 35 |
| Haze (%) | 0.2 | 0.1 | 0.17 | 0.28 | 0.21 | 0.09 |
| \| B \| value | 0.7 | 0.4 | 0.4 | 1.0 | 0.5 | 0.5 |
| Average light transmittance at 400-800nm (%) | 89.5 | 90.2 | 89.9 | 89.1 | 89.6 | 90.4 |
| Light transmittance at 550nm wavelength (%) | 89.3 | 90.2 | 89.9 | 88.8 | 89.5 | 90.5 |
| Vickers hardness (Kgf/mm$^2$) | 605 | 603 | 572 | 620 | 552 | 551 |
| Young's modulus (GPa) | 98 | 91 | 93 | 101 | 90 | 90 |

Table 2.

| Embodiment | 7# | 8# | 9# | 10# | 11# | 12# |
|---|---|---|---|---|---|---|
| $SiO_2$ | 50 | 48 | 48 | 48 | 48 | 49 |
| $Al_2O_3$ | 23 | 22 | 23 | 21 | 21 | 19 |
| ZnO | 10 | 15 | 13 | 15 | 13 | 12.5 |
| $Li_2O$ | 2 | 3 | 3 | 3 | 4 | 3 |
| $TiO_2$ | 2 | 4 | 4 | 3 | 6 | 5 |
| MgO | 2 | 2 | 2 | 2 | 3 | 3 |
| $ZrO_2$ | 3 | 1.5 | 2.5 | 1.5 | 1 | 1 |
| $P_2O_5$ | 2 | 2 | 2 | 2 | 1 | 0.5 |
| $K_2O$ | 2 | 0 | 0 | 1 | 0 | 0 |
| $Na_2O$ | 0 | 1 | 0.5 | 0 | 1 | 5 |
| CaO+BaO+SrO | 3 | 0 | 1 | 3 | 1 | 1 |
| $Y_2O_3$ | 0 | 1 | 0 | 0 | 0 | 0 |
| $B_2O_3$ | 0 | 0 | 1 | 0 | 0 | 0 |
| $Sb_2O_3$ | 1 | 0.5 | 0 | 0.5 | 1 | 1 |
| total | 100 | 100 | 100 | 100 | 100 | 100 |
| $SiO_2/Al_2O_3$ | 2.17 | 2.18 | 2.09 | 2.29 | 2.29 | 2.58 |
| $Al_2O_3+ZnO$ | 33 | 37 | 36 | 36 | 34 | 31.5 |
| $Al_2O_3/ZnO$ | 2.3 | 1.47 | 1.77 | 1.4 | 1.62 | 1.52 |
| $Li_2O/TiO_2$ | 1 | 0.75 | 0.75 | 1 | 0.67 | 0.6 |

(continued)

| Embodiment | 7# | 8# | 9# | 10# | 11# | 12# |
|---|---|---|---|---|---|---|
| $P_2O_5/ZrO_2$ | 0.67 | 1.33 | 0.8 | 1.33 | 1 | 0.5 |
| $(TiO_2+ZnO)/Al_2O_3$ | 0.52 | 0.86 | 0.74 | 0.86 | 0.9 | 0.92 |
| $(Al_2O_3+Li_2O)/P_2O_5$ | 12.5 | 12.5 | 13 | 12 | 25 | 44 |
| $(Li_2O+MgO)/TiO_2$ | 2 | 1.25 | 1.25 | 1.67 | 1.17 | 1.2 |
| $(K_2O+Na_2O)/ZnO$ | 0.2 | 0.07 | 0.04 | 0.07 | 0.08 | 0.4 |
| $(SiO_2+Na_2O)/ZnO$ | 5 | 3.27 | 3.73 | 3.2 | 3.77 | 4.32 |
| $Al_2O_3/(MgO+TiO_2)$ | 5.75 | 3.67 | 3.83 | 4.2 | 2.33 | 2.38 |
| $P_2O_5+ZrO_2$ | 5 | 3.5 | 4.5 | 3.5 | 2 | 1.5 |
| Content of crystalline phase (%) | 33.2 | 40 | 38.4 | 39.1 | 37.5 | 37 |
| Type of crystalline phase | $ZnAl_2O_4$ | $ZnAl_2O_4$ | $ZnAl_2O_4$ | $ZnAl_2O_4$ | Quartz solid solution, $ZnAl_2O_4$ | Quartz solid solution, $ZnAl_2O_4$ |
| Grain size (nm) | 30 | 20 | 15 | 32 | 36 | 44 |
| Haze (%) | 0.12 | 0.22 | 0.18 | 0.17 | 0.25 | 0.25 |
| \| B \| value | 0.5 | 0.7 | 0.7 | 0.5 | 0.8 | 0.8 |
| Average light transmittance at 400-800nm (%) | 90.3 | 89.5 | 89.7 | 89.7 | 89.3 | 89.3 |
| Light transmittance at 550nm wavelength (%) | 90.4 | 89.4 | 89.5 | 89.5 | 89.1 | 89.1 |
| Vickers hardness (Kgf/mm$^2$) | 579 | 607 | 604 | 606 | 594 | 593 |
| Young's modulus (GPa) | 90 | 98 | 95 | 97 | 95 | 89 |

Table 3.

| Embodiment | 13# | 14# | 15# | 16# | 17# | 18# |
|---|---|---|---|---|---|---|
| $SiO_2$ | 51 | 50 | 50 | 52 | 48 | 50 |
| $Al_2O_3$ | 19 | 21 | 22 | 24 | 23 | 22 |
| ZnO | 12.5 | 10 | 11 | 12 | 13 | 11 |
| $Li_2O$ | 4 | 2 | 1 | 2 | 3 | 2 |
| $TiO_2$ | 5 | 2 | 2 | 3 | 4 | 2 |
| MgO | 3 | 2 | 5 | 2 | 1 | 3 |
| $ZrO_2$ | 1 | 3 | 3 | 1 | 2 | 4 |
| $P_2O_5$ | 1 | 2 | 2 | 2 | 3 | 2.5 |
| $K_2O$ | 0 | 0 | 0 | 0 | 0 | 0 |
| $Na_2O$ | 2 | 1 | 1.5 | 1 | 0 | 1 |
| CaO+BaO+SrO | 1 | 3 | 2 | 1 | 1 | 2 |
| $Y_2O_3$ | 0 | 3 | 0 | 0 | 0 | 0 |
| $B_2O_3$ | 0 | 0 | 0 | 0 | 1.5 | 0 |
| $Sb_2O_3$ | 0.5 | 1 | 0.5 | 0 | 0.5 | 0.5 |
| total | 100 | 100 | 100 | 100 | 100 | 100 |
| $SiO_2/Al_2O_3$ | 2.68 | 2.38 | 2.27 | 2.17 | 2.09 | 2.27 |

(continued)

| Embodiment | 13# | 14# | 15# | 16# | 17# | 18# |
|---|---|---|---|---|---|---|
| $Al_2O_3$+ZnO | 31.5 | 31 | 33 | 36 | 36 | 33 |
| $Al_2O_3$/ZnO | 1.52 | 2.1 | 2 | 2 | 1.77 | 2 |
| $Li_2O$/$TiO_2$ | 0.8 | 1 | 0.5 | 0.67 | 0.75 | 1 |
| $P_2O_5$/$ZrO_2$ | 1 | 0.67 | 0.67 | 2 | 1.5 | 0.63 |
| ($TiO_2$+ZnO) /$Al_2O_3$ | 0.92 | 0.57 | 0.59 | 0.63 | 0.74 | 0.59 |
| ($Al_2O_3$+$Li_2O$) /$P_2O_5$ | 23 | 11.5 | 11.5 | 13 | 8.67 | 9.6 |
| ($Li_2O$+MgO) /$TiO_2$ | 1.4 | 2 | 3 | 1.33 | 1 | 2.5 |
| ($K_2O$+$Na_2O$) /ZnO | 0.16 | 0.1 | 0.14 | 0.08 | 0 | 0.09 |
| ($SiO_2$+$Na_2O$) /ZnO | 4.24 | 5.1 | 4.68 | 4.42 | 3.69 | 4.64 |
| $Al_2O_3$/ (MgO+$TiO_2$) | 2.38 | 5.25 | 3.14 | 4.8 | 4.6 | 4.4 |
| $P_2O_5$+$ZrO_2$ | 2 | 5 | 5 | 3 | 5 | 6.5 |
| Content of crystalline phase (%) | 37.5 | 31 | 30.8 | 35.2 | 38.2 | 30.9 |
| Type of crystalline phase | Quartz solid solution, $ZnAl_2O_4$ | $ZnAl_2O_4$ | Quartz solid solution, $ZnAl_2O_4$ | $ZnAl_2O_4$ | $ZnAl_2O_4$ | Quartz solid solution, $ZnAl_2O_4$ |
| Grain size (nm) | 41 | 30 | 43 | 35 | 16 | 38 |
| Haze (%) | 0.19 | 0.09 | 0.18 | 0.11 | 0.17 | 0.23 |
| \| B \| value | 0.6 | 0.5 | 1.0 | 0.8 | 0.7 | 0.5 |
| Average light transmittance at 400-800nm (%) | 89.8 | 90.2 | 89.8 | 90.1 | 89.7 | 89.5 |
| Light transmittance at 550nm wavelength (%) | 89.8 | 90.3 | 89.7 | 90.2 | 89.6 | 89.4 |
| Vickers hardness (Kgf/mm$^2$) | 595 | 580 | 550 | 597 | 601 | 551 |
| Young's modulus (GPa) | 96 | 90 | 89 | 93 | 94 | 88 |

Table 4.

| Embodiment | 19# | 20# | 21# | 22# | 23# | 24# |
|---|---|---|---|---|---|---|
| $SiO_2$ | 49 | 49 | 48 | 51 | 49 | 48 |
| $Al_2O_3$ | 22 | 22 | 22 | 22 | 25 | 25 |
| ZnO | 11 | 17 | 13 | 11.5 | 17 | 11 |
| $Li_2O$ | 2 | 3 | 3 | 6 | 3 | 5 |
| $TiO_2$ | 3 | 3 | 4 | 4 | 3 | 4 |
| MgO | 2 | 2 | 2 | 3 | 1 | 2 |
| $ZrO_2$ | 2 | 1.5 | 1.5 | 0.5 | 0.5 | 1.5 |
| $P_2O_5$ | 3.5 | 2 | 2 | 2 | 1 | 2 |
| $K_2O$ | 0 | 0 | 0 | 0 | 0 | 0 |
| $Na_2O$ | 3 | 0 | 0 | 0 | 0 | 0 |

(continued)

| Embodiment | 19# | 20# | 21# | 22# | 23# | 24# |
|---|---|---|---|---|---|---|
| CaO+BaO+SrO | 2 | 0 | 1 | 0 | 0 | 1 |
| $Y_2O_3$ | 0 | 0 | 0 | 0 | 0 | 0 |
| $B_2O_3$ | 0 | 0 | 3 | 0 | 0 | 0 |
| $Sb_2O_3$ | 0.5 | 0.5 | 0.5 | 0 | 0.5 | 0.5 |
| total | 100 | 100 | 100 | 100 | 100 | 100 |
| $SiO_2/Al_2O_3$ | 2.23 | 2.23 | 2.18 | 2.32 | 1.96 | 1.92 |
| $Al_2O_3$+ZnO | 33 | 39 | 35 | 33.5 | 42 | 36 |
| $Al_2O_3$/ZnO | 2 | 1.29 | 1.69 | 1.91 | 1.47 | 2.27 |
| $Li_2O/TiO_2$ | 0.67 | 1 | 0.75 | 1.5 | 1 | 1.25 |
| $P_2O_5/ZrO_2$ | 1.75 | 1.33 | 1.33 | 4 | 2 | 1.33 |
| $(TiO_2$+ZnO) $/Al_2O_3$ | 0.64 | 0.91 | 0.77 | 0.7 | 0.8 | 0.6 |
| $(Al_2O_3$+$Li_2O$) $/P_2O_5$ | 6.86 | 12.5 | 12.5 | 14 | 28 | 15 |
| $(Li_2O$+MgO) $/TiO_2$ | 1.33 | 1.67 | 1.25 | 2.25 | 1.33 | 1.75 |
| $(K_2O$+$Na_2O$) /ZnO | 0.27 | 0 | 0 | 0 | 0 | 0 |
| $(SiO_2$+$Na_2O$) /ZnO | 4.73 | 2.88 | 3.69 | 4.43 | 2.88 | 4.36 |
| $Al_2O_3$/ (MgO+$TiO_2$) | 4.4 | 4.4 | 3.67 | 3.14 | 6.25 | 4.17 |
| $P_2O_5$+$ZrO_2$ | 5.5 | 3.5 | 3.5 | 2.5 | 1.5 | 3.5 |
| Content of crystalline phase (%) | 35.1 | 39.5 | 37.3 | 34 | 42 | 35.1 |
| Type of crystalline phase | $ZnAl_2O_4$ | $ZnAl_2O_4$ | $ZnAl_2O_4$ | Quartz solid solution, $ZnAl_2O_4$ | $ZnAl_2O_4$ | $ZnAl_2O_4$ |
| Grain size (nm) | 36 | 32 | 20 | 45 | 39 | 18 |
| Haze (%) | 0.12 | 0.17 | 0.13 | 0.21 | 0.24 | 0.12 |
| \| B \| value | 0.8 | 0.5 | 0.7 | 0.3 | 0.5 | 0.4 |
| Average light transmittance at 400-800nm (%) | 89.8 | 89.7 | 90.0 | 89.5 | 89.5 | 90.2 |
| Light transmittance at 550nm wavelength (%) | 89.8 | 89.7 | 90.1 | 89.3 | 89.3 | 90.3 |
| Vickers hardness ($Kgf/mm^2$) | 590 | 604 | 603 | 578 | 604 | 600 |
| Young's modulus (GPa) | 92 | 98 | 94 | 94 | 100 | 92 |

<Microcrystalline glass product embodiment>

This embodiment obtains the microcrystalline glass product with composition shown in Tables 5-8 by the above manufacturing method of microcrystalline glass product. In addition, the characteristics of each microcrystalline glass product are measured by the test method mentioned in the present invention, and the measurement results are shown in Tables 5 to 8. The following embodiments show haze, average light transmittance at 400-800nm wavelength, light transmittance at 550nm wavelength, and average light |B| value at 400-800nm, and the thickness of the test sample is 0.7mm.

Table 5.

| Embodiment | 1# | 2# | 3# | 4# | 5# | 6# |
|---|---|---|---|---|---|---|
| $SiO_2$ | 48 | 46 | 49 | 46 | 48 | 54 |

(continued)

| Embodiment | 1# | 2# | 3# | 4# | 5# | 6# |
|---|---|---|---|---|---|---|
| $Al_2O_3$ | 23 | 27 | 18 | 23 | 19 | 22 |
| ZnO | 15 | 11 | 12 | 18 | 11 | 10 |
| $Li_2O$ | 3 | 5 | 5 | 2 | 2 | 2 |
| $TiO_2$ | 4 | 4 | 4 | 4 | 2 | 2 |
| MgO | 2 | 2 | 6 | 1 | 3 | 2 |
| $ZrO_2$ | 1.5 | 1.5 | 2 | 2 | 4 | 2 |
| $P_2O_5$ | 2 | 2 | 2 | 2 | 2.5 | 2 |
| $K_2O$ | 0 | 0 | 1 | 0 | 0 | 0 |
| $Na_2O$ | 1 | 0 | 0 | 1 | 1 | 1 |
| CaO+BaO+SrO | 0 | 1 | 0 | 0 | 2 | 2 |
| $Y_2O_3$ | 0 | 0 | 0 | 0 | 5 | 0 |
| $B_2O_3$ | 0 | 0 | 0 | 0 | 0 | 0 |
| $Sb_2O_3$ | 0.50 | 0.5 | 1 | 1 | 0.5 | 1 |
| total | 100 | 100 | 100 | 100 | 100 | 100 |
| $SiO_2/Al_2O_3$ | 2.09 | 1.7 | 2.72 | 2 | 2.53 | 2.45 |
| $Al_2O_3$+ZnO | 38 | 38 | 30 | 41 | 30 | 32 |
| $Al_2O_3$/ZnO | 1.53 | 2.45 | 1.5 | 1.28 | 1.73 | 2.2 |
| $Li_2O/TiO_2$ | 0.75 | 1.25 | 1.25 | 0.5 | 1 | 1 |
| $P_2O_5/ZrO_2$ | 1.33 | 1.33 | 1 | 1 | 0.63 | 1 |
| $(TiO_2$+ZnO$)$ $/Al_2O_3$ | 0.83 | 0.56 | 0.89 | 0.96 | 0.68 | 0.55 |
| $(Al_2O_3$+$Li_2O)$ $/P_2O_5$ | 13 | 16 | 11.5 | 12.5 | 8.4 | 12 |
| $(Li_2O$+MgO$)$ $/TiO_2$ | 1.25 | 1.75 | 2.75 | 0.75 | 2.5 | 2 |
| $(K_2O$+$Na_2O)$ /ZnO | 0.07 | 0 | 0.08 | 0.06 | 0.09 | 0.1 |
| $(SiO_2$+$Na_2O)$ /ZnO | 3.27 | 4.18 | 4.08 | 2.61 | 4.45 | 5.5 |
| $Al_2O_3$/ ( MgO+$TiO_2$ ) | 3.83 | 4.5 | 1.8 | 4.6 | 3.8 | 5.5 |
| $P_2O_5$+$ZrO_2$ | 3.5 | 3.5 | 4 | 4 | 6.5 | 4 |
| Content of crystalline phase (%) | 41.1 | 35.2 | 33.1 | 44.1 | 28.0 | 31.5 |
| Type of crystalline phase | $ZnAl_2O_4$ | $ZnAl_2O_4$ | Quartz solid so-lution, $ZnAl_2O_4$ | $ZnAl_2O_4$ | Quartz solid so-lution, $ZnAl_2O_4$ | $ZnAl_2O_4$ |
| Grain size (nm) | 20 | 21 | 34 | 15 | 39 | 35 |
| Surface stress (Mpa) | 298 | 379 | 339 | 232 | 236 | 226 |
| Depth of ion exchange layer ($\mu$m) | 95 | 122 | 91 | 78 | 94 | 103 |
| Drop ball test height (mm) | 1600 | 1500 | 1400 | 1600 | 1400 | 1500 |
| Drop resistance (mm) | 1500 | 1900 | 1700 | 1900 | 1500 | 1500 |
| Fracture toughness (Mpa•m$^{1/2}$) | 1.3 | 1.6 | 1.2 | 1.0 | 1.3 | 1.4 |
| Four-point bending strength (Mpa) | 742 | 950 | 858 | 579 | 580 | 570 |

(continued)

| Embodiment | 1# | 2# | 3# | 4# | 5# | 6# |
|---|---|---|---|---|---|---|
| Compressive strength (N) | 537 | 510 | 418 | 404 | 412 | 433 |
| Vickers hardness (Kgf/mm$^2$) | 719 | 715 | 685 | 740.0 | 654 | 660 |
| Haze (%) | 0.2 | 0.1 | 0.17 | 0.28 | 0.21 | 0.09 |
| \| B \| value | 0.7 | 0.4 | 0.4 | 1.0 | 0.5 | 0.5 |
| Average light transmittance at 400-800nm (%) | 89.5 | 90.2 | 89.9 | 89.1 | 89.6 | 90.4 |
| Light transmittance at 550nm wavelength (%) | 89.3 | 90.2 | 89.9 | 88.8 | 89.5 | 90.5 |

Table 6.

| Embodiment | 7# | 8# | 9# | 10# | 11# | 12# |
|---|---|---|---|---|---|---|
| $SiO_2$ | 50 | 48 | 48 | 48 | 48 | 49 |
| $Al_2O_3$ | 23 | 22 | 23 | 21 | 21 | 19 |
| ZnO | 10 | 15 | 13 | 15 | 13 | 12.5 |
| $Li_2O$ | 2 | 3 | 3 | 3 | 4 | 3 |
| $TiO_2$ | 2 | 4 | 4 | 3 | 6 | 5 |
| MgO | 2 | 2 | 2 | 2 | 3 | 3 |
| $ZrO_2$ | 3 | 1.5 | 2.5 | 1.5 | 1 | 1 |
| $P_2O_5$ | 2 | 2 | 2 | 2 | 1 | 0.5 |
| $K_2O$ | 2 | 0 | 0 | 1 | 0 | 0 |
| $Na_2O$ | 0 | 1 | 0.5 | 0 | 1 | 5 |
| CaO+BaO+SrO | 3 | 0 | 1 | 3 | 1 | 1 |
| $Y_2O_3$ | 0 | 1 | 0 | 0 | 0 | 0 |
| $B_2O_3$ | 0 | 0 | 1 | 0 | 0 | 0 |
| $Sb_2O_3$ | 1 | 0.5 | 0 | 0.5 | 1 | 1 |
| total | 100 | 100 | 100 | 100 | 100 | 100 |
| $SiO_2/Al_2O_3$ | 2.17 | 2.18 | 2.09 | 2.29 | 2.29 | 2.58 |
| $Al_2O_3$+ZnO | 33 | 37 | 36 | 36 | 34 | 31.5 |
| $Al_2O_3$/ZnO | 2.3 | 1.47 | 1.77 | 1.4 | 1.62 | 1.52 |
| $Li_2O/TiO_2$ | 1 | 0.75 | 0.75 | 1 | 0.67 | 0.6 |
| $P_2O_5/ZrO_2$ | 0.67 | 1.33 | 0.8 | 1.33 | 1 | 0.5 |
| ( $TiO_2$+ZnO ) /$Al_2O_3$ | 0.52 | 0.86 | 0.74 | 0.86 | 0.9 | 0.92 |
| ($Al_2O_3$+$Li_2O$) /$P_2O_5$ | 12.5 | 12.5 | 13 | 12 | 25 | 44 |
| ($Li_2O$+MgO) /$TiO_2$ | 2 | 1.25 | 1.25 | 1.67 | 1.17 | 1.2 |
| ($K_2O$+$Na_2O$) /ZnO | 0.2 | 0.07 | 0.04 | 0.07 | 0.08 | 0.4 |
| ($SiO_2$+$Na_2O$) /ZnO | 5 | 3.27 | 3.73 | 3.2 | 3.77 | 4.32 |
| $Al_2O_3$/ (MgO+$TiO_2$) | 5.75 | 3.67 | 3.83 | 4.2 | 2.33 | 2.38 |
| $P_2O_5$+$ZrO_2$ | 5 | 3.5 | 4.5 | 3.5 | 2 | 1.5 |

(continued)

| Embodiment | 7# | 8# | 9# | 10# | 11# | 12# |
|---|---|---|---|---|---|---|
| Content of crystalline phase (%) | 33.2 | 40 | 38.4 | 39.1 | 37.5 | 37 |
| Type of crystalline phase | $ZnAl_2O_4$ | $ZnAl_2O_4$ | $ZnAl_2O_4$ | $ZnAl_2O_4$ | Quartz solid solution, $ZnAl_2O_4$ | Quartz solid solution, $ZnAl_2O_4$ |
| Grain size (nm) | 30 | 20 | 15 | 32 | 36 | 44 |
| Surface stress (Mpa) | 231 | 301 | 299 | 294 | 305 | 245 |
| Depth of ion exchange layer ($\mu$m) | 107 | 95 | 106 | 90 | 90 | 88 |
| Drop ball test height (mm) | 1500 | 1600 | 1700 | 1600 | 1500 | 1400 |
| Drop resistance (mm) | 1600 | 1800 | 1800 | 1700 | 1700 | 1600 |
| Fracture toughness ($Mpa \cdot m^{1/2}$) | 1.4 | 1.3 | 1.4 | 1.2 | 1.2 | 1.2 |
| Four-point bending strength (Mpa) | 585 | 759 | 751 | 731 | 769 | 608 |
| Compressive strength (N) | 456 | 537 | 503 | 501 | 461 | 443 |
| Vickers hardness (Kgf/mm$^2$) | 692 | 719 | 710 | 712 | 705 | 703 |
| Haze (%) | 0.12 | 0.22 | 0.18 | 0.17 | 0.25 | 0.25 |
| \| B \| value | 0.5 | 0.7 | 0.7 | 0.5 | 0.8 | 0.8 |
| Average light transmittance at 400-800nm (%) | 90.3 | 89.5 | 89.7 | 89.7 | 89.3 | 89.3 |
| Light transmittance at 550nm wavelength (%) | 90.4 | 89.4 | 89.5 | 89.5 | 89.1 | 89.1 |

Table 7.

| Embodiment | 13# | 14# | 15# | 16# | 17# | 18# |
|---|---|---|---|---|---|---|
| $SiO_2$ | 51 | 50 | 50 | 52 | 48 | 50 |
| $Al_2O_3$ | 19 | 21 | 22 | 24 | 23 | 22 |
| ZnO | 12.5 | 10 | 11 | 12 | 13 | 11 |
| $Li_2O$ | 4 | 2 | 1 | 2 | 3 | 2 |
| $TiO_2$ | 5 | 2 | 2 | 3 | 4 | 2 |
| MgO | 3 | 2 | 5 | 2 | 1 | 3 |
| $ZrO_2$ | 1 | 3 | 3 | 1 | 2 | 4 |
| $P_2O_5$ | 1 | 2 | 2 | 2 | 3 | 2.5 |
| $K_2O$ | 0 | 0 | 0 | 0 | 0 | 0 |
| $Na_2O$ | 2 | 1 | 1.5 | 1 | 0 | 1 |
| CaO+BaO+SrO | 1 | 3 | 2 | 1 | 1 | 2 |
| $Y_2O_3$ | 0 | 3 | 0 | 0 | 0 | 0 |
| $B_2O_3$ | 0 | 0 | 0 | 0 | 1.5 | 0 |
| $Sb_2O_3$ | 0.5 | 1 | 0.5 | 0 | 0.5 | 0.5 |

(continued)

| Embodiment | 13# | 14# | 15# | 16# | 17# | 18# |
|---|---|---|---|---|---|---|
| total | 100 | 100 | 100 | 100 | 100 | 100 |
| $SiO_2/Al_2O_3$ | 2.68 | 2.38 | 2.27 | 2.17 | 2.09 | 2.27 |
| $Al_2O_3+ZnO$ | 31.5 | 31 | 33 | 36 | 36 | 33 |
| $Al_2O_3/ZnO$ | 1.52 | 2.1 | 2 | 2 | 1.77 | 2 |
| $Li_2O/TiO_2$ | 0.8 | 1 | 0.5 | 0.67 | 0.75 | 1 |
| $P_2O_5/ZrO_2$ | 1 | 0.67 | 0.67 | 2 | 1.5 | 0.63 |
| $(TiO_2+ZnO)/Al_2O_3$ | 0.92 | 0.57 | 0.59 | 0.63 | 0.74 | 0.59 |
| $(Al_2O_3+Li_2O)/P_2O_5$ | 23 | 11.5 | 11.5 | 13 | 8.67 | 9.6 |
| $(Li_2O+MgO)/TiO_2$ | 1.4 | 2 | 3 | 1.33 | 1 | 2.5 |
| $(K_2O+Na_2O)/ZnO$ | 0.16 | 0.1 | 0.14 | 0.08 | 0 | 0.09 |
| $(SiO_2+Na_2O)/ZnO$ | 4.24 | 5.1 | 4.68 | 4.42 | 3.69 | 4.64 |
| $Al_2O_3/(MgO+TiO_2)$ | 2.38 | 5.25 | 3.14 | 4.8 | 4.6 | 4.4 |
| $P_2O_5+ZrO_2$ | 2 | 5 | 5 | 3 | 5 | 6.5 |
| Content of crystalline phase (%) | 37.5 | 31 | 30.8 | 35.2 | 38.2 | 30.9 |
| Type of crystalline phase | Quartz solid solution, ZnAl$_2$O$_4$ | ZnAl$_2$O$_4$ | Quartz solid solution, ZnAl$_2$O$_4$ | ZnAl$_2$O$_4$ | ZnAl$_2$O$_4$ | Quartz solid solution, ZnAl$_2$O$_4$ |
| Grain size (nm) | 41 | 30 | 43 | 35 | 16 | 38 |
| Surface stress (Mpa) | 306 | 252 | 203 | 249 | 238 | 213 |
| Depth of ion exchange layer ($\mu$m) | 88 | 107 | 84 | 98 | 101 | 94 |
| Drop ball test height (mm) | 1500 | 1500 | 1000 | 1500 | 1600 | 1100 |
| Drop resistance (mm) | 1700 | 1600 | 1200 | 1600 | 1700 | 1400 |
| Fracture toughness (Mpa·m$^{1/2}$) | 1.2 | 1.4 | 1.1 | 1.3 | 1.3 | 1.3 |
| Four-point bending strength (Mpa) | 786 | 621 | 502 | 608 | 598 | 530 |
| Compressive strength (N) | 443 | 456 | 432 | 471 | 510 | 412 |
| Vickers hardness (Kgf/mm$^2$) | 703 | 692 | 654 | 707 | 712 | 654 |
| Haze (%) | 0.19 | 0.09 | 0.18 | 0.11 | 0.17 | 0.23 |
| \| B \| value | 0.6 | 0.5 | 1.0 | 0.8 | 0.7 | 0.5 |
| Average light transmittance at 400-800nm (%) | 89.8 | 90.2 | 89.8 | 90.1 | 89.7 | 89.5 |
| Light transmittance at 550nm wavelength (%) | 89.8 | 90.3 | 89.7 | 90.2 | 89.6 | 89.4 |

Table 8.

| Embodiment | 19# | 20# | 21# | 22# | 23# | 24# |
|---|---|---|---|---|---|---|
| $SiO_2$ | 49 | 49 | 48 | 51 | 49 | 48 |
| $Al_2O_3$ | 22 | 22 | 22 | 22 | 25 | 25 |
| $ZnO$ | 11 | 17 | 13 | 11.5 | 17 | 11 |
| $Li_2O$ | 2 | 3 | 3 | 6 | 3 | 5 |
| $TiO_2$ | 3 | 3 | 4 | 4 | 3 | 4 |
| $MgO$ | 2 | 2 | 2 | 3 | 1 | 2 |
| $ZrO_2$ | 2 | 1.5 | 1.5 | 0.5 | 0.5 | 1.5 |
| $P_2O_5$ | 3.5 | 2 | 2 | 2 | 1 | 2 |
| $K_2O$ | 0 | 0 | 0 | 0 | 0 | 0 |
| $Na_2O$ | 3 | 0 | 0 | 0 | 0 | 0 |
| $CaO+BaO+SrO$ | 2 | 0 | 1 | 0 | 0 | 1 |
| $Y_2O_3$ | 0 | 0 | 0 | 0 | 0 | 0 |
| $B_2O_3$ | 0 | 0 | 3 | 0 | 0 | 0 |
| $Sb_2O_3$ | 0.5 | 0.5 | 0.5 | 0 | 0.5 | 0.5 |
| total | 100 | 100 | 100 | 100 | 100 | 100 |
| $SiO_2/Al_2O_3$ | 2.23 | 2.23 | 2.18 | 2.32 | 1.96 | 1.92 |
| $Al_2O_3+ZnO$ | 33 | 39 | 35 | 33.5 | 42 | 36 |
| $Al_2O_3/ZnO$ | 2 | 1.29 | 1.69 | 1.91 | 1.47 | 2.27 |
| $Li_2O/TiO_2$ | 0.67 | 1 | 0.75 | 1.5 | 1 | 1.25 |
| $P_2O_5/ZrO_2$ | 1.75 | 1.33 | 1.33 | 4 | 2 | 1.33 |
| $(TiO_2+ZnO)/Al_2O_3$ | 0.64 | 0.91 | 0.77 | 0.7 | 0.8 | 0.6 |
| $(Al_2O_3+Li_2O)/P_2O_5$ | 6.86 | 12.5 | 12.5 | 14 | 28 | 15 |
| $(Li_2O+MgO)/TiO_2$ | 1.33 | 1.67 | 1.25 | 2.25 | 1.33 | 1.75 |
| $(K_2O+Na_2O)/ZnO$ | 0.27 | 0 | 0 | 0 | 0 | 0 |
| $(SiO_2+Na_2O)/ZnO$ | 4.73 | 2.88 | 3.69 | 4.43 | 2.88 | 4.36 |
| $Al_2O_3/(MgO+TiO_2)$ | 4.4 | 4.4 | 3.67 | 3.14 | 6.25 | 4.17 |
| $P_2O_5+ZrO_2$ | 5.5 | 3.5 | 3.5 | 2.5 | 1.5 | 3.5 |
| Content of crystalline phase (%) | 35.1 | 39.5 | 37.3 | 34 | 42 | 35.1 |
| Type of crystalline phase | $ZnAl_2O_4$ | $ZnAl_2O_4$ | $ZnAl_2O_4$ | Quartz solid solution, $ZnAl_2O_4$ | $ZnAl_2O_4$ | $ZnAl_2O_4$ |
| Grain size (nm) | 36 | 32 | 20 | 45 | 39 | 18 |
| Surface stress (Mpa) | 207 | 293 | 297 | 385 | 237 | 346 |
| Depth of ion exchange layer ($\mu$m) | 98 | 83 | 106 | 121 | 88 | 124 |
| Drop ball test height (mm) | 1500 | 1600 | 1600 | 1500 | 1700 | 1500 |
| Drop resistance (mm) | 1500 | 1600 | 1800 | 2000 | 1800 | 2000 |
| Fracture toughness ($Mpa \cdot m^{1/2}$) | 1.3 | 1.1 | 1.4 | 1.6 | 1.2 | 1.6 |
| Four-point bending strength (Mpa) | 513 | 736 | 746 | 960 | 606 | 890 |

(continued)

| Embodiment | 19# | 20# | 21# | 22# | 23# | 24# |
|---|---|---|---|---|---|---|
| Compressive strength (N) | 472 | 492 | 492 | 469 | 543 | 493 |
| Vickers hardness (Kgf/mm$^2$) | 703 | 713 | 709 | 694 | 715 | 708 |
| Haze (%) | 0.12 | 0.17 | 0.13 | 0.21 | 0.24 | 0.12 |
| \| B \| value | 0.8 | 0.5 | 0.7 | 0.3 | 0.5 | 0.4 |
| Average light transmittance at 400-800nm (%) | 89.8 | 89.7 | 90.0 | 89.5 | 89.5 | 90.2 |
| Light transmittance at 550nm wavelength (%) | 89.8 | 89.7 | 90.1 | 89.3 | 89.3 | 90.3 |

## Claims

1. A microcrystalline glass product, wherein components thereof are represented by weight percentage, comprising: 40-55% of $SiO_2$; 15-30% of $Al_2O_3$; 0.1-6% of $Li_2O$; 9-20% of ZnO; 0.1-6% of MgO; and 0.5-7% of $TiO_2$.

2. The microcrystalline glass product according to claim 1, wherein components thereof are represented by weight percentage, further comprising: 0-8% of $P_2O_5$+$ZrO_2$; and/or 0-6% of $Na_2O$; and/or 0-4% of $B_2O_3$; and/or 0-3% of $K_2O$; and/or 0-5% of CaO+BaO+SrO; and/or 0-6% of $Y_2O_3$; and/or 0-2% of clarifying agent.

3. A microcrystalline glass product, wherein components thereof comprise $SiO_2$, $Al_2O_3$, ZnO, and $TiO_2$, the microcrystalline glass product comprises spinel crystalline phase, and a drop resistance of the microcrystalline glass product is 1200mm or more.

4. The microcrystalline glass product according to claim 3, wherein components thereof are represented by weight percentage, comprising: 40-55% of $SiO_2$; and/or 15-30% of $Al_2O_3$; and/or 0.1-6% of $Li_2O$; and/or 9-20% of ZnO; and/or 0.1-6% of MgO; and/or 0.5-7% of $TiO_2$; and/or 0-8% of $P_2O_5$+$ZrO_2$; and/or 0-6% of $Na_2O$; and/or 0-4% of $B_2O_3$; and/or 0-3% of $K_2O$; and/or 0-5% of CaO+BaO+SrO; and/or 0-6% of $Y_2O_3$; and/or 0-2% of clarifying agent.

5. The microcrystalline glass product according to any of claims 1-4, wherein components thereof are represented by weight percentage, and one or more of the following 7 conditions are satisfied:

    1) $Li_2O/TiO_2$ is 0.2-4.5, $Li_2O/TiO_2$ is preferably 0.5-3.5, $Li_2O/TiO_2$ is more preferably 0.7-2.5, $Li_2O/TiO_2$ is further preferably 0.75-1.5;
    2) $Al_2O_3$+ZnO is 26-45%, $Al_2O_3$+ZnO is preferably 30-42%, $Al_2O_3$+ZnO is more preferably 32-42%, $Al_2O_3$+ZnO is further preferably 35-40%;
    3) $Al_2O_3$/ZnO is 1.0-3.0, $Al_2O_3$/ZnO is preferably 1.2-2.8, $Al_2O_3$/ZnO is more preferably 1.25-2.5, $Al_2O_3$/ZnO is further preferably 1.5-2.3;
    4) $SiO_2/Al_2O_3$ is 1.5-3.2, $SiO_2/Al_2O_3$ is preferably 1.7-3.0, $SiO_2/Al_2O_3$ is more preferably 1.8-2.8, $SiO_2/Al_2O_3$ is further preferably 2.0-2.5;
    5) ($TiO_2$+ZnO)/$Al_2O_3$ is 0.4-1.5, ($TiO_2$+ZnO)/$Al_2O_3$ is preferably 0.5-1.2, ($TiO_2$+ZnO)/$Al_2O_3$ is more preferably 0.6-1.0, ($TiO_2$+ZnO)/$Al_2O_3$ is further preferably 0.6-0.9;
    6) ($Li_2O$+MgO)/$TiO_2$ is 0.3-8.0, ($Li_2O$+MgO)/$TiO_2$ is preferably 0.5-5.0, ($Li_2O$+MgO)/$TiO_2$ is more preferably 1.0-3.0, ($Li_2O$+MgO)/$TiO_2$ is further preferably 1.2-2.5;
    7) $Al_2O_3$/(MgO+$TiO_2$) is 1.3-10.0, $Al_2O_3$/(MgO+$TiO_2$) is preferably 1.5-8.0, $Al_2O_3$/(MgO+$TiO_2$) is more preferably 2.5-6.5, $Al_2O_3$/(MgO+$TiO_2$) is further preferably 3.0-5.5.

6. The microcrystalline glass product according to any of claims 1-4, wherein components thereof are represented by weight percentage, and one or more of the following 4 conditions are satisfied:

    1) ($Al_2O_3$+$Li_2O$)/$P_2O_5$ is 5.0-45.0, ($Al_2O_3$+$Li_2O$)/$P_2O_5$ is preferably 7.0-35.0, ($Al_2O_3$+$Li_2O$)/$P_2O_5$ is more preferably 8.0-30.0, ($Al_2O_3$+$Li_2O$)/$P_2O_5$ is further preferably 10.0-25.0;
    2) $P_2O_5$/$ZrO_2$ is 0.1-5.0, $P_2O_5$/$ZrO_2$ is preferably 0.2-3.0, $P_2O_5$/$ZrO_2$ is more preferably 0.5-2.0, $P_2O_5$/$ZrO_2$ is

further preferably 0.6-1.5;

3) $(SiO_2+Na_2O)/ZnO$ is 2.2-6.2, $(SiO_2+Na_2O)/ZnO$ is preferably 2.5-6.0, $(SiO_2+Na_2O)/ZnO$ is more preferably 2.8-5.5, $(SiO_2+Na_2O)/ZnO$ is further preferably 3.0-5.0;

4) $(Na_2O+K_2O)/ZnO$ is 0.8 or less, $(Na_2O+K_2O)/ZnO$ is preferably 0.6 or less, $(Na_2O+K_2O)/ZnO$ is more preferably 0.4 or less, $(Na_2O+K_2O)/ZnO$ is further preferably 0.2 or less.

7. The microcrystalline glass product according to any of claims 1-4, wherein components thereof are represented by weight percentage, comprising: 45-53% of $SiO_2$, preferably 48-52% of $SiO_2$; and/or 18-25% of $Al_2O_3$, preferably 20-23% of $Al_2O_3$; and/or 1-5% of $Li_2O$, preferably 2-4% of $Li_2O$; and/or 11-18% of ZnO, preferably 12-16% of ZnO; and/or 1-5% of MgO, preferably 2-4% of MgO; and/or 1-6% of $TiO_2$, preferably 2-5% of $TiO_2$; and/or 0.1-7% of $P_2O_5$ +$ZrO_2$, preferably 0.5-5% of $P_2O_5$+$ZrO_2$; and/or 0-4% of $Na_2O$, preferably 0-2% of $Na_2O$; and/or 0-2% of $B_2O_3$, preferably 0-1% of $B_2O_3$; and/or 0-2% of $K_2O$, preferably 0-1% of $K_2O$; and/or 0-4% of CaO+BaO+SrO, preferably 0-2% of CaO+BaO+SrO; and/or 0-4% of $Y_2O_3$, preferably 0-2% of $Y_2O_3$; and/or 0-1% of clarifying agent, preferably 0-0.5% of clarifying agent.

8. The microcrystalline glass product according to any of claims 1-4, wherein components thereof are represented by weight percentage, comprising: 0-5% of $P_2O_5$, preferably 0.5-4% of $P_2O_5$, more preferably 1-3% of $P_2O_5$; and/or 0-5% of $ZrO_2$, preferably 0.5-4% of $ZrO_2$, more preferably 1-3% of $ZrO_2$.

9. The microcrystalline glass product according to any of claims 1-4, wherein the microcrystalline glass product comprises spinel crystalline phase, preferably the spinel crystalline phase has a higher weight percentage than other crystalline phases, more preferably the spinel crystalline phase accounts for 20-60% of the microcrystalline glass product by weight percentage, further preferably the spinel crystalline phase accounts for 25-50% of the microcrystalline glass product by weight percentage, more further preferably the spinel crystalline phase accounts for 25-45% of the microcrystalline glass product by weight percentage, and furthermore preferably the spinel crystalline phase accounts for 30-45% of the microcrystalline glass product by weight percentage.

10. The microcrystalline glass product according to any of claims 1-4, wherein the microcrystalline glass product comprises quartz crystalline phase, preferably the quartz crystalline phase accounts for 20% or less of the microcrystalline glass product by weight percentage, more preferably the quartz crystalline phase accounts for 10% or less of the microcrystalline glass product by weight percentage, further preferably the quartz crystalline phase accounts for 5% or less of the microcrystalline glass product by weight percentage, and more further preferably the quartz crystalline phase is not contained in the microcrystalline glass product.

11. The microcrystalline glass product according to any of claims 1-4, wherein components thereof are represented by weight percentage, comprising: 0-5% of $La_2O_3$+$Gd_2O_3$+$Yb_2O_3$+$Nb_2O_5$+$WO_3$+$Bi_2O_3$+$Ta_2O_5$+$TeO_2$, preferably 0-2% of $La_2O_3$+$Gd_2O_3$+$Yb_2O_3$+$Nb_2O_5$+$WO_3$+$Bi_2O_3$+$Ta_2O_5$+$TeO_2$, more preferably 0-1% of $La_2O_3$+$Gd_2O_3$+$Yb_2O_3$ +$Nb_2O_5$+$WO_3$+$Bi_2O_3$+$Ta_2O_5$+$TeO_2$; it further preferably contains no $La_2O_3$; and/or do not contain $Gd_2O_3$; and/or do not contain $Yb_2O_3$; and/or do not contain $Nb_2O_5$, and/or do not contain $WO_3$; and/or do not contain $Bi_2O_3$; and/or do not contain $Ta_2O_5$; and/or do not contain $TeO_2$.

12. The microcrystalline glass product according to any of claims 1-4, wherein a grain size of the microcrystalline glass product is 60nm or less, preferably 45nm or less, more preferably 10-30nm; and/or a depth of an ion exchange layer is 75$\mu$m or more, preferably 80-150$\mu$m, more preferably 100-125$\mu$m; and/or a surface stress is 200MPa or more, preferably 250-400MPa, more preferably 300-400MPa; and/or a drop ball test height is 1000mm or more, preferably 1200mm or more, more preferably 1500mm or more; and/or a drop resistance is 1200mm or more, preferably 1300mm or more, more preferably 1400mm or more; and/or a fracture toughness is 1.0MPa$\cdot$m$^{1/2}$ or more, preferably 1.2MPa$\cdot$m$^{1/2}$ or more, more preferably 1.2-1.6MPa$\cdot$m$^{1/2}$; and/or a four-point bending strength is 500MPa or more, preferably 600MPa or more, more preferably 700-1000MPa; and/or a compressive strength is 400N or more, preferably 400-550N, more preferably 450-550N; and/or Vickers hardness is 650kgf/mm$^2$ or more, preferably 660kgf/mm$^2$ or more, more preferably 680-750kgf/mm$^2$.

13. The microcrystalline glass product according to any of claims 1-4, wherein the haze of the microcrystalline glass product with a thickness of 1mm or less is 0.3% or less, preferably 0.25% or less, more preferably 0.05-0.2%; and/or average light transmittance at 400-800nm wavelength is 87.0% or more, preferably 88.5% or more, more preferably 89.5% or more; and/or light transmittance at 550nm wavelength is 87.0% or more, preferably 88.0% or more, more preferably 89.0% or more; and/or average light |B| value at 400-800nm is 1.0 or less, preferably 0.8 or less, more preferably 0.3-0.6.

14. The microcrystalline glass product according to claim 13, wherein the thickness of the microcrystalline glass product is 0.2-1mm, preferably 0.3-0.9mm, more preferably 0.5-0.8mm, further preferably 0.55mm or 0.6mm or 0.68mm or 0.7mm or 0.75mm.

15. The microcrystalline glass product according to any of claims 1-4, wherein components thereof are represented by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

16. A microcrystalline glass, wherein components thereof are represented by weight percentage, comprising: 40-55% of $SiO_2$; 15-30% of $Al_2O_3$; 0.1-6% of $Li_2O$; 9-20% of ZnO; 0.1-6% of MgO; and 0.5-7% of $TiO_2$.

17. The microcrystalline glass according to claim 16, wherein components thereof are represented by weight percentage, further comprising: 0-8% of $P_2O_5+ZrO_2$; and/or 0-6% of $Na_2O$; and/or 0-4% of $B_2O_3$; and/or 0-3% of $K_2O$; and/or 0-5% of CaO+BaO+SrO; and/or 0-6% of $Y_2O_3$; and/or 0-2% of clarifying agent.

18. A microcrystalline glass, wherein components thereof comprise $SiO_2$, $Al_2O_3$, ZnO, and $TiO_2$, the microcrystalline glass comprises spinel crystalline phase, and Vickers hardness of the microcrystalline glass is 550kgf/mm$^2$ or more.

19. The microcrystalline glass according to claim 18, wherein components thereof are represented by weight percentage, comprising: 40-55% of $SiO_2$; and/or 15-30% of $Al_2O_3$; and/or 0.1-6% of $Li_2O$; and/or 9-20% of ZnO; and/or 0.1-6% of MgO; and/or 0.5-7% of $TiO_2$; and/or 0-8% of $P_2O_5+ZrO_2$; and/or 0-6% of $Na_2O$; and/or 0-4% of $B_2O_3$; and/or 0-3% of $K_2O$; and/or 0-5% of CaO+BaO+SrO; and/or 0-6% of $Y_2O_3$; and/or 0-2% of clarifying agent.

20. The microcrystalline glass according to any of claims 16-19, wherein components thereof are represented by weight percentage, and one or more of the following 7 conditions are satisfied:

1) $Li_2O/TiO_2$ is 0.2-4.5, $Li_2O/TiO_2$ is preferably 0.5-3.5, $Li_2O/TiO_2$ is more preferably 0.7-2.5, $Li_2O/TiO_2$ is further preferably 0.75-1.5;
2) $Al_2O_3+ZnO$ is 26-45%, $Al_2O_3+ZnO$ is preferably 30-42%, $Al_2O_3+ZnO$ is more preferably 32-42%, $Al_2O_3+ZnO$ is further preferably 35-40%;
3) $Al_2O_3/ZnO$ is 1.0-3.0, $Al_2O_3/ZnO$ is preferably 1.2-2.8, $Al_2O_3/ZnO$ is more preferably 1.25-2.5, $Al_2O_3/ZnO$ is further preferably 1.5-2.3;
4) $SiO_2/Al_2O_3$ is 1.5-3.2, $SiO_2/Al_2O_3$ is preferably 1.7-3.0, $SiO_2/Al_2O_3$ is more preferably 1.8-2.8, $SiO_2/Al_2O_3$ is further preferably 2.0-2.5;
5) $(TiO_2+ZnO)/Al_2O_3$ is 0.4-1.5, $(TiO_2+ZnO)/Al_2O_3$ is preferably 0.5-1.2, $(TiO_2+ZnO)/Al_2O_3$ is more preferably 0.6-1.0, $(TiO_2+ZnO)/Al_2O_3$ is further preferably 0.6-0.9;
6) $(Li_2O+MgO)/TiO_2$ is 0.3-8.0, $(Li_2O+MgO)/TiO_2$ is preferably 0.5-5.0, $(Li_2O+MgO)/TiO_2$ is more preferably 1.0-3.0, $(Li_2O+MgO)/TiO_2$ is further preferably 1.2-2.5;
7) $Al_2O_3/(MgO+TiO_2)$ is 1.3-10.0, $Al_2O_3/(MgO+TiO_2)$ is preferably 1.5-8.0, $Al_2O_3/(MgO+TiO_2)$ is more preferably 2.5-6.5, $Al_2O_3/(MgO+TiO_2)$ is further preferably 3.0-5.5.

21. The microcrystalline glass according to any of claims 16-19, wherein components thereof are represented by weight percentage, and one or more of the following 4 conditions are satisfied:

1) $(Al_2O_3+Li_2O)/P_2O_5$ is 5.0-45.0, $(Al_2O_3+Li_2O)/P_2O_5$ is preferably 7.0-35.0, $(Al_2O_3+Li_2O)/P_2O_5$ is more preferably 8.0-30.0, $(Al_2O_3+Li_2O)/P_2O_5$ is further preferably 10.0-25.0;
2) $P_2O_5/ZrO_2$ is 0.1-5.0, $P_2O_5/ZrO_2$ is preferably 0.2-3.0, $P_2O_5/ZrO_2$ is more preferably 0.5-2.0, $P_2O_5/ZrO_2$ is further preferably 0.6-1.5;
3) $(SiO_2+Na_2O)/ZnO$ is 2.2-6.2, $(SiO_2+Na_2O)/ZnO$ is preferably 2.5-6.0, $(SiO_2+Na_2O)/ZnO$ is more preferably 2.8-5.5, $(SiO_2+Na_2O)/ZnO$ is further preferably 3.0-5.0;
4) $(Na_2O+K_2O)/ZnO$ is 0.8 or less, $(Na_2O+K_2O)/ZnO$ is preferably 0.6 or less, $(Na_2O+K_2O)/ZnO$ is more preferably 0.4 or less, $(Na_2O+K_2O)/ZnO$ is further preferably 0.2 or less.

22. The microcrystalline glass according to any of claims 16-19, wherein components thereof are represented by weight percentage, comprising: 45-53% of $SiO_2$, preferably 48-52% of $SiO_2$; and/or 18-25% of $Al_2O_3$, preferably 20-23% of $Al_2O_3$; and/or 1-5% of $Li_2O$, preferably 2-4% of $Li_2O$; and/or 11-18% of ZnO, preferably 12-16% of ZnO; and/or 1-5% of MgO, preferably 2-4% of MgO; and/or 1-6% of $TiO_2$, preferably 2-5% of $TiO_2$; and/or 0.1-7% of $P_2O_5+ZrO_2$, preferably

0.5-5% of $P_2O_5$+$ZrO_2$; and/or 0-4% of $Na_2O$, preferably 0-2% of $Na_2O$; and/or 0-2% of $B_2O_3$, preferably 0-1% of $B_2O_3$; and/or 0-2% of $K_2O$, preferably 0-1% of $K_2O$; and/or 0-4% of CaO+BaO+SrO, preferably 0-2% of CaO+BaO+SrO; and/or 0-4% of $Y_2O_3$, preferably 0-2% of $Y_2O_3$; and/or 0-1% of clarifying agent, preferably 0-0.5% of clarifying agent.

23. The microcrystalline glass according to any of claims 16-19, wherein components thereof are represented by weight percentage, comprising: 0-5% of $P_2O_5$, preferably 0.5-4% of $P_2O_5$, more preferably 1-3% of $P_2O_5$; and/or 0-5% of $ZrO_2$, preferably 0.5-4% of $ZrO_2$, more preferably 1-3% of $ZrO_2$.

24. The microcrystalline glass according to any of claims 16-19, wherein the microcrystalline glass comprises spinel crystalline phase, preferably the spinel crystalline phase has a higher weight percentage than other crystalline phases, more preferably the spinel crystalline phase accounts for 20-60% of the microcrystalline glass by weight percentage, further preferably the spinel crystalline phase accounts for 25-50% of the microcrystalline glass by weight percentage, more further preferably the spinel crystalline phase accounts for 25-45% of the microcrystalline glass by weight percentage, and furthermore preferably the spinel crystalline phase accounts for 30-45% of the microcrystalline glass by weight percentage.

25. The microcrystalline glass according to any of claims 16-19, wherein the microcrystalline glass comprises quartz crystalline phase, preferably the quartz crystalline phase accounts for 20% or less of the microcrystalline glass by weight percentage, more preferably the quartz crystalline phase accounts for 10% or less of the microcrystalline glass by weight percentage, further preferably the quartz crystalline phase accounts for 5% or less of the microcrystalline glass by weight percentage, and more further preferably the quartz crystalline phase is not contained in the microcrystalline glass.

26. The microcrystalline glass according to any of claims 16-19, wherein components thereof are represented by weight percentage, comprising: 0-5% of $La_2O_3$+$Gd_2O_3$+$Yb_2O_3$+$Nb_2O_5$+$WO_3$+$Bi_2O_3$+$Ta_2O_5$+$TeO_2$, preferably 0-2% of $La_2O_3$+$Gd_2O_3$+$Yb_2O_3$+$Nb_2O_5$+$WO_3$+$Bi_2O_3$+$Ta_2O_5$+$TeO_2$, more preferably 0-1% of $La_2O_3$+$Gd_2O_3$+$Yb_2O_3$+$Nb_2O_5$+$WO_3$+$Bi_2O_3$+$Ta_2O_5$+$TeO_2$; it further preferably contains no $La_2O_3$; and/or do not contain $Gd_2O_3$; and/or do not contain $Yb_2O_3$; and/or do not contain $Nb_2O_5$, and/or do not contain $WO_3$; and/or do not contain $Bi_2O_3$; and/or do not contain $Ta_2O_5$; and/or do not contain $TeO_2$.

27. The microcrystalline glass according to any of claims 16-19, wherein a grain size of the microcrystalline glass is 60nm or less, preferably 45nm or less, more preferably 10-30nm; and/or Young's modulus is 80-110GPa, preferably 85-105GPa, more preferably 90-105GPa; and/or Vickers hardness is 550kgf/mm$^2$ or more, preferably 580kgf/mm$^2$ or more, more preferably 600-650kgf/mm$^2$.

28. The microcrystalline glass according to any of claims 16-19, wherein the haze of the microcrystalline glass with a thickness of 1mm or less is 0.3% or less, preferably 0.25% or less, more preferably 0.05-0.2%; and/or average light transmittance at 400-800nm wavelength is 87.0% or more, preferably 88.5% or more, more preferably 89.5% or more; and/or light transmittance at 550nm wavelength is 87.0% or more, preferably 88.0% or more, more preferably 89.0% or more; and/or average light |B| value at 400-800nm is 1.0 or less, preferably 0.8 or less, more preferably 0.3-0.6.

29. The microcrystalline glass according to claim 28, wherein the thickness of the microcrystalline glass is 0.2-1mm, preferably 0.3-0.9mm, more preferably 0.5-0.8mm, further preferably 0.55mm or 0.6mm or 0.68mm or 0.7mm or 0.75mm.

30. The microcrystalline glass according to any of claims 16-19, wherein components thereof are represented by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

31. A microcrystalline glass former, comprising the microcrystalline glass according to any of claims 16-30.

32. A glass cover plate, comprising the microcrystalline glass product according to any of claims 1-15, and/or the microcrystalline glass according to any of claims 16-30, and/or the microcrystalline glass former according to claim 31.

33. A glass component, comprising the microcrystalline glass product according to any of claims 1-15, and/or the microcrystalline glass according to any of claims 16-30, and/or the microcrystalline glass former according to claim 31.

34. An electronic device, comprising the microcrystalline glass product according to any of claims 1-15, and/or the microcrystalline glass according to any of claims 16-30, and/or the microcrystalline glass former according to claim 31, and/or the glass cover plate according to claim 32, and/or the glass component according to claim 33.

35. A display device, comprising the microcrystalline glass product according to any of claims 1-15, and/or the microcrystalline glass according to any of claims 16-30, and/or the microcrystalline glass former according to claim 31, and/or the glass cover plate according to claim 32, and/or the glass component according to claim 33.

36. A manufacturing method for the microcrystalline glass product according to any of claims 1-15, wherein the method comprises the following steps: forming a matrix glass, forming the matrix glass into a microcrystalline glass through a crystallization process, and then forming the microcrystalline glass into a microcrystalline glass product through a chemical strengthening process.

37. The manufacturing method for the microcrystalline glass product according to claim 36, wherein forming the matrix glass comprises the following steps: mixing raw materials uniformly according to component proportion, placing the mixture into a crucible, melting in an electric furnace or gas furnace within a temperature range of 1350-1550°C for 5-24 hours, preferably at 1450-1550°C, and then obtaining a matrix glass after clarifying, homogenizing, molding, and annealing, wherein the clarification temperature is greater than 1550°C but less than or equal to 1650°C, and the annealing temperature is 450-600°C.

38. The manufacturing method for the microcrystalline glass product according to claim 36, wherein the crystallization process comprises the following steps: heating up to a specified crystallization treatment temperature, holding the temperature for a certain time after reaching the crystallization treatment temperature, and then performing cooling, wherein the crystallization treatment temperature is 600-800°C, preferably 650-750°C, and holding time under the crystallization treatment temperature is 1-10 hours, preferably 3-6 hours.

39. The manufacturing method for the microcrystalline glass product according to claim 36, wherein the crystallization process comprises the following steps: performing nucleation process treatment under a first temperature, and then performing crystal growth process treatment under a second temperature.

40. The manufacturing method for the microcrystalline glass product according to claim 39, wherein the crystallization process comprises: the first temperature is 600-700°C, and the second temperature is greater than 700°C but less than or equal to 800°C; a holding time under the first temperature is 1-6 hours; and a holding time under the second temperature is 2-5 hours.

41. The manufacturing method for the microcrystalline glass product according to claim 36, wherein the chemical strengthening process comprises: immersing the microcrystalline glass into a salt bath of molten Na salt at a temperature of 350-470°C for 1-36 hours, wherein the temperature range is preferably 400-460°C, and the time range is preferably 2-15 hours; and/or immersing the microcrystalline glass into a mixed salt bath of molten K salt and Na salt at a temperature of 360°C-450°C for 1-36 hours, wherein the time range is preferably 2-24 hours.

42. A manufacturing method for the microcrystalline glass according to any of claims 16-30, wherein the method comprises the following steps: forming a matrix glass, and then forming the matrix glass into a microcrystalline glass through a crystallization process.

43. The manufacturing method for the microcrystalline glass according to claim 42, wherein forming the matrix glass comprises the following steps: mixing raw materials uniformly according to component proportion, placing the mixture into a crucible, melting in an electric furnace or gas furnace within a temperature range of 1350-1550°C for 5-24 hours, preferably at 1450-1550°C, and then obtaining a matrix glass after clarifying, homogenizing, molding, and annealing, wherein the clarification temperature is greater than 1550°C but less than or equal to 1650°C, and the annealing temperature is 450-600°C.

44. The manufacturing method for the microcrystalline glass according to claim 42, wherein the crystallization process comprises the following steps: heating up to a specified crystallization treatment temperature, holding the temperature for a certain time after reaching the crystallization treatment temperature, and then performing cooling, wherein the crystallization treatment temperature is 600-800°C, preferably 650-750°C, and holding time under the crystallization treatment temperature is 1-10 hours, preferably 3-6 hours.

45. The manufacturing method for the microcrystalline glass product according to claim 42, wherein the crystallization process comprises the following steps: performing nucleation process treatment under a first temperature, and then performing crystal growth process treatment under a second temperature.

46. The manufacturing method for the microcrystalline glass product according to claim 45, wherein the crystallization process comprises: the first temperature is 600-700°C, and the second temperature is greater than 700°C but less than or equal to 800°C; a holding time under the first temperature is 1-6 hours; and a holding time under the second temperature is 2-5 hours.

47. A manufacturing method for the microcrystalline glass former according to claim 31, wherein the method comprises: grinding or polishing the microcrystalline glass into a microcrystalline glass former, or making the matrix glass or microcrystalline glass into the microcrystalline glass former through hot bending process or pressing process at a certain temperature.

48. The manufacturing method for the microcrystalline glass former according to claim 47, wherein the method comprises the following steps: performing a crystallization heat treatment process once for the matrix glass, including heating, heat preservation and nucleation, heating, heat preservation and crystallization, cooling to room temperature, and forming a precrystallized glass; and thermally processing the precrystallized glass to obtain the microcrystalline glass former.

49. The manufacturing method for the microcrystalline glass former according to claim 47, wherein the method comprises the following steps:

1) heating and warm-up: placing the matrix glass or precrystallized glass or microcrystalline glass into a mould, and making the mould pass through each heating site in a hot bending machine successively and stay at each site for a certain time for heat preservation, wherein temperature of warm-up zone is 400-800°C, pressure is 0.01-0.05MPa, and time is 40-200s;
2) pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s;
3) pressure holding and cooling: transferring the mould to a cooling site to cool down site by site, wherein cooling temperature range is 750-500°C, the pressure is 0.01-0.05Mpa, and the time is 40-200s.

## INTERNATIONAL SEARCH REPORT

| International application No. |
| --- |
| **PCT/CN2024/084090** |

| A. | CLASSIFICATION OF SUBJECT MATTER |
| --- | --- |

C03C 10/02(2006.01)i;  C03C 3/085(2006.01)i

According to International Patent Classification (IPC) or to both national classification and IPC

| B. | FIELDS SEARCHED |
| --- | --- |

Minimum documentation searched (classification system followed by classification symbols)

IPC: C03C

Documentation searched other than minimum documentation to the extent that such documents are included in the fields searched

Electronic data base consulted during the international search (name of data base and, where practicable, search terms used)

CNTXT; CNABS; DWPI; VEN; WPABS; CNKI; ELSEVIER: 微晶玻璃, 陶瓷玻璃, 尖晶石, 石英, 离子交换, 化学强化, 氧化硅, 氧化铝, 氧化锌, 氧化镁, 氧化钛, 氧化锂, microcrystalline glass, ceramic glass, spinel, quartz, ion-exchanged, chemically strengthened, silicon dioxide, SiO2, aluminum oxide, Al2O3, zinc oxide, ZnO, magnesium oxide, MgO, titanium oxide, TiO2, lithium oxide, Li2O

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101905952 A (OHARA CORP.) 08 December 2010 (2010-12-08) description, paragraphs 2, 18-50, 133-135, 141, 145-150, 154-164, and 188-191 | 1-49 |
| PX | CN 116621455 A (CDGM GLASS CO., LTD.) 22 August 2023 (2023-08-22) claims 1-49 | 1-49 |
| PX | CN 116375345 A (CDGM GLASS CO., LTD.) 04 July 2023 (2023-07-04) description, paragraphs 6-100 and 235-260 | 1-49 |
| X | CN 114907014 A (CDGM GLASS CO., LTD.) 16 August 2022 (2022-08-16) claims 1-80 | 1-49 |
| X | CN 115286251 A (QINGYUAN CSG ENERGY SAVING NEW MATERIAL CO., LTD. et al.) 04 November 2022 (2022-11-04) description, paragraphs 40, 48, 58-75, and 78-84 | 1-49 |
| A | JP 2003128435 A (NIPPON ELECTRIC GLASS CO., LTD.) 08 May 2003 (2003-05-08) entire document | 1-49 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 May 2024** | **16 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/084090**

| Patent document cited in search report | | | Publication date (day/month/year) | Patent family member(s) | | | Publication date (day/month/year) |
|---|---|---|---|---|---|---|---|
| CN | 101905952 | A | 08 December 2010 | EP | 2263979 | A1 | 22 December 2010 |
| | | | | US | 2013011695 | A1 | 10 January 2013 |
| | | | | US | 8852764 | B2 | 07 October 2014 |
| | | | | US | 2011135964 | A1 | 09 June 2011 |
| | | | | US | 8283060 | B2 | 09 October 2012 |
| | | | | JP | 2011207626 | A | 20 October 2011 |
| | | | | JP | 4815002 | B2 | 16 November 2011 |
| CN | 116621455 | A | 22 August 2023 | None | | | |
| CN | 116375345 | A | 04 July 2023 | None | | | |
| CN | 114907014 | A | 16 August 2022 | None | | | |
| CN | 115286251 | A | 04 November 2022 | None | | | |
| JP | 2003128435 | A | 08 May 2003 | None | | | |

Form PCT/ISA/210 (patent family annex) (July 2022)